(19)

Europäisches
Patentamt
European
Patent Office
Office européen
des brevets

(11) **EP 2 866 421 B1**

(12) **EUROPEAN PATENT SPECIFICATION**

(45) Date of publication and mention
of the grant of the patent:
**03.07.2019 Bulletin 2019/27**

(51) Int Cl.:
*H04L 29/08* [(2006.01)]    *G06Q 50/00* [(2012.01)]

(21) Application number: **14190351.8**

(22) Date of filing: **24.10.2014**

(54) **Method and apparatus for identifying a same user in multiple social networks**

Verfahren und Vorrichtung zur Identifizierung desselben Benutzers in mehreren sozialen Netzwerken

Procédé et appareil d'identification d'un même utilisateur dans de multiples réseaux sociaux

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.10.2013  CN 201310513952**

(43) Date of publication of application:
**29.04.2015  Bulletin 2015/18**

(73) Proprietor: **Huawei Technologies Co., Ltd.
Longgang District
Shenzhen, Guangdong 518129 (CN)**

(72) Inventors:
  • **He, Caifeng**
    **Shenzhen Guangdong 518129 (CN)**
  • **Qian, Jianfeng**
    **Shenzhen Guangdong 518129 (CN)**
  • **Fan, Wei**
    **Shenzhen Guangdong 518129 (CN)**

(74) Representative: **Maiwald Patent- und
Rechtsanwaltsgesellschaft mbH
Elisenhof
Elisenstraße 3
80335 München (DE)**

(56) References cited:
  • **MALHOTRA A ET AL: "Studying User Footprints
    in Different Online Social Networks", ADVANCES
    IN SOCIAL NETWORKS ANALYSIS AND MINING
    (ASONAM), 2012 IEEE/ACM INTERNATIONAL
    CONFERENCE ON, IEEE, 26 August 2012
    (2012-08-26), pages 1065-1070, XP032447276,
    DOI: 10.1109/ASONAM.2012.184 ISBN:
    978-1-4673-2497-7**

  • **Paridhi Jain ET AL: "@I seek 'fb.me': Identifying
    Users across Multiple Online Social Networks",
    WWW 2013 Companion, 13 May 2013
    (2013-05-13), XP055172969, Rio de Janeiro, Brazil
    Retrieved from the Internet:
    URL:http://precog.iiitd.edu.in/Publication
    s_files/19wole01-jain.pdf [retrieved on
    2015-03-02]**
  • **PELED OLGA ET AL: "Entity Matching in Online
    Social Networks", 2013 INTERNATIONAL
    CONFERENCE ON SOCIAL COMPUTING, IEEE, 8
    September 2013 (2013-09-08), pages 339-344,
    XP032548936, DOI:
    10.1109/SOCIALCOM.2013.53 [retrieved on
    2013-12-23]**
  • **Jan Vosecky ET AL: "User Identification across
    Social Networks using the Web Profile and Friend
    Network", International Journal of Web
    Applications, 1 March 2010 (2010-03-01),
    XP055172766, Retrieved from the Internet:
    URL:http://www.cse.ust.hk/~jvosecky/files/User
    Identification IJWA.pdf [retrieved on 2015-03-02]**
  • **ELIE RAAD ET AL: "User Profile Matching in
    Social Networks", NETWORK-BASED
    INFORMATION SYSTEMS (NBIS), 2010 13TH
    INTERNATIONAL CONFERENCE ON, IEEE,
    PISCATAWAY, NJ, USA, 14 September 2010
    (2010-09-14), pages 297-304, XP031801834, ISBN:
    978-1-4244-8053-1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 866 421 B1

- **XIANGNAN KONG ET AL: "Inferring anchor links across multiple heterogeneous social networks", PROCEEDINGS OF THE 22ND ACM INTERNATIONAL CONFERENCE ON CONFERENCE ON INFORMATION & KNOWLEDGE MANAGEMENT, CIKM '13, 1 January 2013 (2013-01-01), pages 179-188, XP055172983, New York, New York, USA DOI: 10.1145/2505515.2505531 ISBN: 978-1-45-032263-8**

## Description

### TECHNICAL FIELD

The present invention relates to the field of network user identification technologies, and in particular, to a method and an apparatus for identifying a user in multiple social networks.

### BACKGROUND

Social networks are increasingly popular and of increasing types (for example, Facebook, Twitter, WeChat, and Foursquare). Most of the social networks are independent of one another. Each social network has a large quantity of heterogeneous data sets based on accounts, including diversified data types such as time, location, person and event. One user is often active in multiple social networks by using different accounts, which generates a large quantity of independent data sets scattered over various social networks. Associating data sets of a user in different social networks will greatly extend data information based on the user, which is of great significance for many data mining analyses.

In the prior art, a method for associating data sets of a user in different social networks mainly is as follows: firstly, modeling an account in a social network, generating, by using registration information of the account and text content published in the social network by a user of the account, a vector describing account features, where the vector includes attributes such as a name of the user, the birth date of the user, an academic degree of the user, and a favorite (such as a song, a color, and food) of the user of the account; secondly, assigning different weights to different attributes of the vector, where the weight of an attribute indicates the importance of the attribute for distinguishing different users; and finally, computing a similarity between vectors of different accounts, so as to identify whether the accounts belong to a same user.

The inventor of the present application finds in long-time research and development that, in the foregoing method, attributes describing account features are not comprehensive, and using only registration information of an account and a part of text content cannot depict features of the account comprehensively and accurately.

Malhotra, Anshu et al.: "Studying User Footprints in Different Online Social Networks", 2012 IEEE/ACM International Conference on Advances in Social Networks Analysis and Mining describes context specific techniques to measure the similarity of user profiles in different social networks. In order to determine the footprint of a user, data are collected in two phases. In the first phase, true positive connections between user profiles of different networks are collected. In the second phase, the publicly available profile fields of the users are crawled.

### SUMMARY

A main technical issue resolved by the present invention is to provide a method and an apparatus for identifying a same user in multiple social networks, which can describe user information comprehensively and accurately, so as to make a final prediction result more accurate.

According to a first aspect, the present invention provides a method for identifying a same user in multiple social networks, where it is defined that a same user has only one account in one social network, that the number of accounts in an account combination equals the number of the social networks, and that each account in the account combination comes from a different network; and the method includes: inputting accounts that are in a test set and are obtained from registered accounts in at least two different social networks, and generating a test set account combination from the accounts in the test set; exacting at least two different features that are of each account in the test set account combination and are correlated with behavioral data of a user of the account; inputting accounts in a training set which are obtained from at least two different social networks, and generating a training set account combination from accounts, which belong to a same user, among the accounts in the training set; extracting at least two different features that are of each account in the training set account combination and are correlated with behavioral data of a user of the account; and training the training set with a supervised classification algorithm and by using the at least two different features that are of each account in the training set account combination and are correlated with behavioral data of a user of the account, to obtain a classification and prediction model; inputting the at least two different features that are of each account in the test set account combination and are correlated with behavioral data of a user of the account into the classification and prediction model, to obtain a predicted value or a set of predicted values, which may belong to a same user, of the test set account combination; and performing computation on the predicted value or the set of predicted values of the test set account combination by using an association algorithm, and outputting a computed prediction result for the test set account combination, wherein the association algorithm refers to a process in which correlation between predicted values of a test set account combination is computed to obtain a prediction result for the test set account combination in order to indicate whether the test set account combination belongs or docs not belong to the same user.

In a first possible implementation manner of the first aspect, before the step of inputting the at least two different features that are of each account in the test set account obtain a predicted value or a set of predicted values, which may belong to a user, of the test set account combination; and performing computation on the predicted value or the set of predicted values of the test set account combination by using an association algorithm, and outputting a computed prediction result for the test set account combination, wherein the association algorithm refers to a process in which correlation between predicted values of a test set account combination is computed to obtain a prediction result for the test set account combination in order to indicate whether the test set account combination belongs or does not belong to the user.

In a first possible implementation manner of the first aspect, before the step of inputting the at least two different features that are of each account in the test set account combination and are correlated with behavioral data of a user of the account into a classification and prediction model that is already established, to obtain a predicted value or a set of predicted values, which may belong to a user, of the test set account combination, the method includes: inputting accounts in a training set which are obtained from the at least two different social networks, and generating a training set account combination from accounts, which belong to a user, among the accounts in the training set; exacting at least two different features that are of each account in the training set account combination and are correlated with behavioral data of a user of the account; and training the training set with a supervised classification algorithm by using the at least two different features that are of each account in the training set account combination and are correlated with behavioral data of a user of the account, to obtain the classification and prediction model.

With reference to the first aspect or the first possible implementation manner of the first aspect, in a second implementation manner of the first aspect, the at least two different features that are correlated with behavioral data of a user of the account include: a social feature of an account in the account combination, a spatial feature of account publishing information in the account combination, a temporal feature of account publishing information in the account combination and a text feature of account publishing information in the account combination.

With reference to the second possible implementation manner of the first aspect, in a third possible implementation manner of the first aspect, the social feature of an account in the account combination includes: the number of common adjacent elements, a Jaccard Jaccard similarity coefficient and an Adamic/Adar Adamic/Adar measure, where the number of common adjacent elements refers to the number of common friends of accounts in the account combination, and accounts having the common friends are in the training set; the Jaccard similarity coefficient refers to a ratio of the number of common friends of accounts in the account combination to the number of all friends of accounts in the account combination; and the Adamic/Adar measure refers to influence of common friends of accounts in the account combination on respective social networks.

With reference to the second possible implementation manner of the first aspect, in a fourth possible implementation manner of the first aspect, the spatial feature of account publishing information in the account combination includes: the number of common locations of all account publishing information in the account combination, a cosine similarity of a location set of all account publishing information in the account combination, and an average distance of the location set of all account publishing information in the account combination.

With reference to the second possible implementation manner of the first aspect, in a fifth possible implementation manner of the first aspect, the temporal feature of account publishing information in the account combination includes: the number of common time ranges of all account publishing information in the account combination, and a cosine similarity of a time range set of all account publishing information in the account combination.

With reference to the second possible implementation manner of the first aspect, in a sixth possible implementation manner of the first aspect, the text feature of account publishing information in the account combination includes: an inner product of bag-of-words vectors of all account publishing information in the account combination, and a cosine similarity of the bag-of-words vectors of all account publishing information in the account combination.

With reference to the sixth possible implementation manner of the first aspect, in a seventh possible implementation manner of the first aspect, the method further includes: processing, by using a natural language processing technology, information published by an account in the test set or training set account combination; and generating a bag-of-words vector of the account from the processed information by using a term frequency-inverse document frequency (TF-IDF) weighting model.

With reference to the first aspect or any one of the first possible implementation manner to the seventh possible implementation manner of the first aspect, in an eighth possible implementation manner of the first aspect, the step of performing computation on the predicted value or the set of predicted values of the test set account combination by using an association algorithm, and outputting a computed prediction result for the test set account combination includes: performing computation on the predicted value or the set of predicted values of the test set account combination by using a multi-network approach MNA algorithm, and outputting the computed prediction result for the test set account combination.

With reference to the eighth possible implementation manner of the first aspect, in a ninth possible implementation manner of the first aspect, the step of performing computation on the predicted value or the set of predicted values of the test set account combination by using a multi-network approach MNA algorithm, and outputting the computed prediction result for the test set account combination includes: sorting, in the test set account combination, predicted values or sets of predicted values of all account combinations corresponding to an account in the test set in order of the predicted values, to obtain a list of predicted values of the account; and if a closed account pair exists in the test set account combination, accounts corresponding to the closed account pair belong to a user, and outputting the closed account pair that belongs to a user, where the closed account pair meets the following conditions: a test set account combination corresponding to a maximum predicted value in a list of predicted values of an account $a_i$ is $(a_i, b_j)$, and a test set account combination corresponding to a maximum predicted value in a list of predicted values of an account $b_j$ is $(b_j, a_i)$.

With reference to the ninth possible implementation manner of the first aspect, in a tenth possible implementation manner of the first aspect, after the step of sorting, in the test account $b_j$ do not belong to a same user, and outputting the test set account combination $(b_j, a_k)$ that belongs to a same user; and if the predicted value of the test set account combination $(a_i, b_j)$ is greater than the predicted value of the test set account combination $(b_j, a_k)$, the account $a_i$ and the account $b_j$ belong to a same user and that the account $a_k$ and the account $b_j$ do not belong to a same user, and outputting the test set account combination $(a_i, b_j)$ that belongs to a same user.

According to a second aspect, the present invention provides an apparatus for identifying a same user in multiple social networks, where it is defined that a same user has only one account in one social network, that the number of accounts in an account combination equals the number of social networks, and that each account in the account combination comes from a different social network; and the apparatus includes: a first generating module, a first extraction module, a first obtaining module and an output module, where the first generating module is configured to, after accounts that are in a test set and are obtained from registered accounts in at least two different social networks are inputted, generate a test set account combination from the accounts in the test set; the first extraction module is configured to, after the first generating module generates the test set account combination, extract at least two different features that are of each account in the test set account combination and are correlated with the behavioral data of a user of the account; the first obtaining module is configured to, after the first extraction module extracts the at least two different features that are of each account in the test set account combination and are correlated with the behavioral data of a user of the account, input the extracted feature into a classification and prediction model that is already established, to obtain a predicted value or a set of predicted values, which may belong to a same user, of the test set account combination; and the output module is configured to, after the first obtaining module obtains the predicted value or the set of predicted values, which may belong to a same user, of the test set account combination, perform computation on the predicted value or the set of predicted values of the test set account combination by using an association algorithm, and output a computed prediction result for test set account combination, wherein the association algorithm refers to a process in which correlation between predicted values of a test set account combination is computed to obtain a prediction result for the test set account combination in order to indicate whether the test set account combination belongs or does not belong to the same user; the apparatus further comprising:

> a second generating module, a second extraction module and a second obtaining module;
> the second generating module is configured to, after accounts in a training set which are obtained from registered accounts in at least two different social networks are inputted, generate a training set account combination from accounts, which belong to a same user, among the accounts in the training set;
> the second extraction module is configured to, after the second generating module generates the at least one test set account combination, extract at least two different features that are of each account in the training set account combination and are correlated with behavioral data of a user of the account; and
> the second obtaining module is configured to, after the second extraction module extracts the at least two different features that are of each account in the training set account combination and are correlated with behavioral data of a user of the account, train the training set with a supervised algorithm by using the extracted features, to obtain the classification and prediction model.

In a first possible implementation manner of the second aspect, the apparatus data of a user of the account, input the extracted feature into a classification and prediction model that is already established, to obtain a predicted value or a set of predicted values, which may belong to a user, of the test set account combination; and the output module is configured to, after the first obtaining module obtains the predicted value or the set of predicted values, which may belong to a user, of the test set account combination, perform computation on the predicted value or the set of predicted values of the test set account combination by using an association algorithm, and output a computed prediction result for test set account combination, wherein the association algorithm refers to a process in which correlation between predicted values of a test set account combination is computed to obtain a prediction result for the test set account combination in order to indicate whether the test set account combination belongs or does not belong to the user.

In a first possible implementation manner of the second aspect, the apparatus further includes: a second generating module, a second extraction module and a second obtaining module, where the second generating module is configured to, after accounts in a training set which are obtained from registered accounts in at least two different social networks are inputted, generate a training set account combination from accounts, which belong to a user, among the accounts in the training set; the second extraction module is configured to, after the second generating module generates the training set account combination, extract at least two different features that are of each account in the training set account combination and are correlated with behavioral data of a user of the account; and the second obtaining module is configured to, after the second extraction module extracts the at least two different features that are of each account in the training set account combination and are correlated with behavioral data of a user of the account, train the training set with a supervised classification algorithm by using the extracted features, to obtain the classification and prediction model.

With reference to the second aspect or the first possible implementation manner of the second aspect, in a second implementation manner of the second aspect, the at least two different features that are correlated with behavioral data of a user of the account include: a social feature of an account in the account combination, a spatial feature of account publishing information in the account combination, a temporal feature of account publishing information in the account combination and a text feature of account publishing information in the account combination.

With reference to the second possible implementation manner of the second aspect, in a third possible implementation manner of the second aspect, the social feature of an account in the account combination includes: the number of common adjacent elements, a Jaccard Jaccard similarity coefficient and an Adamic/Adar Adamic/Adar measure, where the number of common adjacent elements refers to the number of common friends of accounts in the account combination, and accounts having the common friends are in the training set; the Jaccard similarity coefficient refers to a ratio of the number of common friends of accounts in the account combination to the number of all friends of accounts in the account combination; and the Adamic/Adar measure refers to influence of the common friends of accounts in the account combination on respective social networks.

With reference to the second possible implementation manner of the second aspect, in a fourth possible implementation manner of the second aspect, the spatial feature of account publishing information in the account combination includes: the number of common locations of all account publishing information in the account combination, a cosine similarity of a location set of all account publishing information in the account combination, and an average distance of the location set of all account publishing information in the account combination.

With reference to the second possible implementation manner of the second aspect, in a fifth possible implementation manner of the second aspect, the temporal feature of account publishing information in the account combination includes: the number of common time ranges of all account publishing information in the account combination, and a cosine similarity of a time range set of all account publishing information in the account combination.

With reference to the second possible implementation manner of the second aspect, in a sixth possible implementation manner of the second aspect, the text feature of account publishing information in the account combination includes: an inner product of bag-of-words vectors of all account publishing information in the account combination, and a cosine similarity of the bag-of-words vectors of all account publishing information in the account combination.

With reference to the sixth possible implementation manner of the second aspect, in a seventh possible implementation manner of the second aspect, the apparatus further includes: a processing module and a third generating module, where the processing module is configured to process, by using a natural language processing technology, information published by an account in the test set or training set account combination; and the third generating module is configured to, after the processing module processes information published by an account in the test set or training set account combination, generate a bag-of-words vector of the account from the processed information by using a term frequency-inverse document frequency (TF-IDF) weighting model.

With reference to the second aspect or any one of the first possible implementation manner to the seventh possible implementation manner of the second aspect, in an eighth possible implementation manner of the second aspect, the output module is specifically configured to, perform computation on the predicted value or the set of predicted values of the test set account combination by using a multi-network approach MNA algorithm, and output the computed prediction result for the test set account combination.

With reference to the eighth possible implementation manner of the second aspect, in a ninth possible implementation manner of the second aspect, the output module includes: an obtaining unit and a first output unit, where the obtaining unit is configured to sort, in the test set account combination, predicted values or sets of predicted values of all account combinations corresponding to an account in the test set in order of the predicted values, to obtain a list of predicted values of the account; and the first output unit is configured to, after the obtaining unit obtains the list of predicted values of the account, if a closed account pair exists in the test set account combination, determine that accounts corresponding to the closed account pair belong to a user, and output the closed account pair that belongs to a user, where the closed account pair meets the following conditions: a test set account combination corresponding to a maximum predicted value in a list of predicted values of an account $a_i$ is $(a_i, b_j)$, and a test set account combination corresponding to a maximum predicted value in a list of predicted values of an account $b_j$ is $(b_j, a_i)$.

With reference to the ninth possible implementation manner of the second aspect, in a tenth possible implementation manner of the second aspect, the output module further includes: a comparison unit and a second output unit, where the comparison unit is configured to, when the test set account combination corresponding to the maximum predicted value in the list of predicted values of the account $a_i$ is $(a_i, b_j)$, and the test set account combination corresponding to the maximum predicted value in the list of predicted values of the account $b_j$ is $(b_j, a_k)$, compare the predicted value of the test set account combination $(a_i, b_j)$ with the predicted value of the test set account combination $(b_j, a_k)$; and the second output unit is configured to, when a comparison result of the comparison unit is that the predicted value of the test set account combination $(a_i, b_j)$ is smaller than the predicted value of the test set account combination $(b_j, a_k)$, determine that the account $a_k$ and the account $b_j$ belong to a user and that the account $a_i$ and the account $b_j$ do not belong to the user, and output the test set account combination $(b_j, a_k)$ that belongs to a user, and when the comparison result of the comparison unit is that the predicted value of the test set account combination $(a_i, b_j)$ is greater than the predicted value of the test set account combination $(b_j, a_k)$, determine that the account $a_i$ and the account $b_j$ belong to a user and that the account $a_k$ and the account $b_j$ do not belong to the user, and output the test set account combination $(a_i, b_j)$ that belongs to a user.

Beneficial effects of the present invention are as follows: unlike the case of the prior art, in the present invention, at least two different features of each account in a test set account combination that are correlated with behavioral data of a user of the account are extracted; the at least two different features that are of each account in the test set account combination and are correlated with behavioral data of a user of the account are inputted into a classification and prediction model that is already established, to obtain a predicted value or a set of predicted values, which may belong to a user, of the test set account combination; computation is performed on the predicted value or the set of predicted values of the test set account combination by using an association algorithm, and a computed prediction result for the test set account combination is outputted. Because the extracted features are at least two different features that are correlated with behavioral data of a user of the account, user information can be greatly enriched, which makes a final prediction result more accurate.

## BRIEF DESCRIPTION OF DRAWINGS

FIG. 1 is a flowchart of an implementation manner of a method for identifying a user in multiple social networks according to the present invention;
FIG. 2 is a flowchart of another implementation manner of the method for identifying a user in multiple social networks according to the present invention;
FIG. 3 is a flowchart of still another implementation manner of the method for identifying a user in multiple social networks according to the present invention;
FIG. 4 is a structural diagram of an implementation manner of an apparatus for identifying a user in multiple social networks according to the present invention;
FIG. 5 is a structural diagram of another implementation manner of the apparatus for identifying a user in multiple social networks according to the present invention;
FIG. 6 is a structural diagram of still another implementation manner of the apparatus for identifying a user in multiple social networks according to the present invention;
FIG. 7 is a structural diagram of yet another implementation manner of the apparatus for identifying a user in multiple social networks according to the present invention; and
FIG. 8 is a structural diagram of yet another implementation manner of the apparatus for identifying a user in multiple social networks according to the present invention.

## DESCRIPTION OF EMBODIMENTS

The present invention is described in detail below with reference to the accompanying drawings and implementation manners.

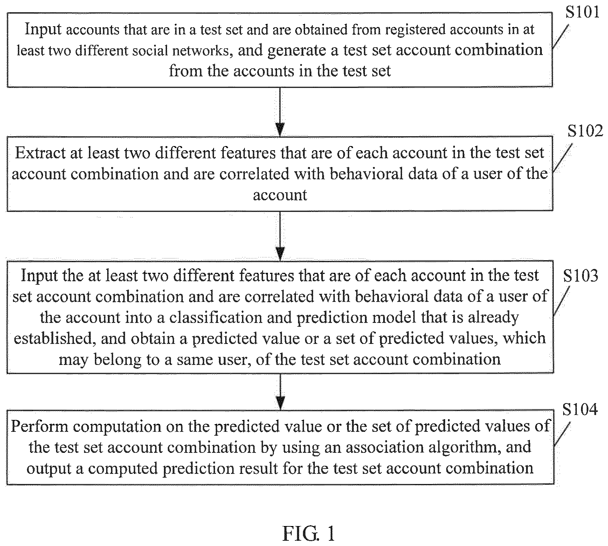

Referring to FIG. 1, FIG. 1 is a flowchart of an implementation manner of a method for identifying a user in multiple social networks according to the present invention, where the method includes:

It is defined that a user has only one account in one social network, that the number of accounts in an account combination equals the number of social networks, and that each account in the account combination comes from a different social network.

Social networks are increasingly popular and of increasing types, such as, Facebook, Twitter, WeChat, and Foursquare. Most of the social networks are independent of one another. Many users have registered accounts in different social networks. In the prior art, a technical solution already exists for indentifying that different accounts in one social network belong to a user, and therefore, it is defined that one user has only one account in one social network, that the number of accounts in an account combination equals the number of social networks, and that each account in the account combination comes from a different social network. For example, a social network A and a social network B are different social networks, the social network A has three user accounts, namely, $a_1$, $a_2$ and $a_3$, the social network B has four user accounts, namely, $b_1$, $b_2$, $b_3$ and $b_4$, and the number of accounts in an account combination is 2. For example, account combinations $(a_1, b_1)$, $(a_2, b_2)$, $(a_3, b_3)$ and the like satisfy the requirement, and account combinations $(a_1, a_2)$, $(b_2, b_3)$ and the like do not satisfy the requirement, because $a_1$ and $a_2$ belong to a social network, and $b_2$ and $b_3$ also belong to a social network.

Step S101: Input accounts that are in a test set and are obtained from registered accounts in at least two different social networks, and generate a test set account combination from the accounts in the test set.

The accounts in the test set come from registered accounts in at least two different social networks, and it is also unknown whether the accounts are registered by a user in the at least two different social networks. Firstly, the accounts in the test set are obtained from the registered accounts in the at least two different social networks, and after the accounts in the test set are inputted, the test set account combination is generated from the accounts in the test set, so as to predict whether accounts in the test set account combination belong to a user.

Step S102: Extract at least two different features that are of each account in the test set account combination and are correlated with behavioral data of a user of the account.

A feature correlated with behavioral data of a user of an account refers to a feature that is correlated with data with respect to behavioral habits or behavior characteristics of the user of the account in a social network, where behavioral data of a user of an account includes: data with respect to time ranges when the user logs in to a social network, data with respect to locations where the user logs in to a social network, data with respect to language habits in which the user publishes comments in a social network, data with respect to friends followed by the user, data with respect to points of interest of the user, and the like. In general, behavioral habits or behavior characteristics of one user are often highly fixed and highly personalized. If features represented by data with respect to behavioral habits or behavior characteristics of users corresponding to accounts in different social networks are very similar, it is most likely that the accounts in the different social networks belong to a user.

As such, by extracting the at least two different features that are of each account in the test set account combination and are correlated with behavioral data of a user of the account, whether the accounts in the test set account combination belong to a user can be predicted.

The at least two different features that are correlated with behavioral data of a user of the account include but are not limited to: a social feature of an account in the account combination, a spatial feature of account publishing information in the account combination, a temporal feature of account publishing information in the account combination, and a text feature of account publishing information in the account combination.

The social feature of an account in the account combination mainly describes a friendship status or friendship characteristic of a user corresponding to the account. The social feature of an account in the account combination includes: the number of common adjacent elements, a Jaccard Jaccard similarity coefficient and an Adamic/Adar Adamic/Adar measure. The number of common adjacent elements refers to the number of common friends of accounts in the account combination, where accounts having the common friends are in a training set; the Jaccard similarity coefficient refers to a ratio of the number of common friends of accounts in the account combination to the number of all friends of accounts in the account combination; and the Adamic/Adar measure refers to influence of the common friends of accounts in the account combination on respective social networks. That is, the Adamic/Adar measure equals

$$\sum \log^{-1} \frac{\text{The number of all friends of } a_m \text{ and } b_m}{2}$$

where $(a_m, b_m)$ is any one of common adjacent elements that belong to $a_i$ and $b_i$.

For example, a social network A and a social network B are different social networks, the social network A has three user accounts $a_i$, namely, $a_1$, $a_2$ and $a_3$, the social network B has four user accounts $b_i$, namely, $b_i$, $b_2$ $b_3$ and $b_4$, the account $a_1$ has friends $a_2$ and $a_3$, and the account $b_1$ has friends $b_2$, $b_3$, and $b_4$, and it is known from a training set that $(a_2, b_2)$ belongs to a user and $(a_3, b_3)$ belongs to a user. Therefore, the number of common friends of the account $a_1$ and the account $b_1$ is 2, that is, the number of common adjacent elements is 2, and because the number of all friends of the account $a_1$ and the account $b_1$ is 5, the Jaccard similarity coefficient is 2/5=0.4. If the number of friends of the account $a_2$ and the account $b_2$ is 6, and the number of friends of the account $a_3$ and the account $b_3$ is 4, the Adamic/Adar measure is $\log^{-1}3+\log^{-1}2$.

The spatial feature of account publishing information in the account combination mainly refers to a feature with respect to locations where the account publishes information, for example: where the account often publishes information, whether at home or in a company or at a public cybercafé; and a location where the account mostly publishes information, and so on. In general, when a user logs in to a social network and publishes information, information in other social networks is updated simultaneously. If there are two accounts in two different social networks, and it is found that the two accounts often publish information at a location, it is most likely that the two accounts in the two different social networks belong to a user.

The spatial feature of account publishing information in the account combination includes but is not limited to: the number of common locations of all account publishing information in the account combination, a cosine similarity of a location set of all account publishing information in the account combination, and an average distance of the location set of all account publishing information in the account combination. The cosine similarity is used to compute similarity of two vectors. When a cosine value gets closer to 1, it indicates that an included angle between the two vectors gets closer to 0 degree, that is, the two vectors are more similar. This is called "cosine similarity". For example, with respect to one account combination $(a_1, b_1)$ in account combinations $(a_i, b_i)$, if locations where the account $a_1$ publishes information include a location 1 (with 4 information publications), a location 2 (with 7 information publications), and a location 3 (with 2 information publications), and locations where the account $b_1$ publishes information include the location 1 (with 4 information publications), the location 2 (with 7 information publications), a location 4 (with 1 information publication), and a location 5 (with 1 information publication), then the number of common locations of the account $a_1$ and the account $b_1$ for information publication is 2; according to a sequence of the location 1, the location 2, the location 3, the location 4, and the location 5, a vector of the account $a_1$ may be (4, 7, 2, 0, 0), and a vector of the account $b_1$ may be (4, 7, 0, 1, 1), and a cosine similarity of the two vectors can be obtained by computing cosine values of the two vectors; according to the three locations of the account $a_1$ (the location 1, the location 2, and the location 3), an average distance of a location set of the account $a_1$ may be obtained; and according to the four locations of the account $b_1$ (the location 1, the location 2, the location 4, and the location 5), an average distance of a location set of the account $b_1$ may be obtained.

The temporal feature of account publishing information in the account combination mainly refers to a feature with respect to time ranges in which the account publishes information. The temporal feature of account publishing information in the account combination includes but is not limited to: the number of common time ranges of all account publishing information in the account combination, and a cosine similarity of a time range set of all account publishing information in the account combination. For example, with respect to one account combination $(a_1, b_1)$ in account combinations $(a_i, b_i)$, if time ranges in which the account $a_1$ publishes information include a time range 1 (with 5 information publications), a time range 2 (with 8 information publications), and a time range 3 (with 2 information publications), and time ranges in which the account $b_1$ publishes information include the time range 1 (with 5 information publications), the time range 2 (with 8 information publications), a time range 4 (with 1 information publication), and a time range 5 (with 1 information publication), then the number of common time ranges of the account $a_1$ and the account $b_1$ for information publication is 2; according to a sequence of the time range 1, the time range 2, the time range 3, the time range 4, and the time range 5, a vector of the account $a_1$ may be (5, 8, 2, 0, 0), and a vector of the account $b_1$ may be (5, 8, 0, 1, 1), and a cosine similarity of the two vectors may be obtained by computing cosine values of the two vectors.

The text feature of account publishing information in the account combination refers to some language habits in which the account publishes information. The text feature of account publishing information in the account combination includes but is not limited to: an inner product of bag-of-words vectors of all account publishing information in the account combination, and a cosine similarity of the bag-of-words vectors of all account publishing information in the account combination.

Bag of words (Bag of words): In information retrieval, a bag of words assumes that, with respect to a text, its word sequence, grammar or syntax are ignored and the text is regarded merely as a word set or a combination of words, and that each word in the text occurs independently and is independent of occurrence of other words. In other words, when an author of the text chooses a word in any one position, the choice is made independently under no influence of a previous sentence. Inner product is also referred to as scalar product or dot product. Assuming there are n-dimensional vectors $\alpha$ and $\beta$, the inner product of vectors is an inner product of the vectors $\alpha$ and $\beta$, that is, $\alpha \cdot \beta$. A simple example is used to describe one manner of obtaining a bag-of-words vector: with respect to one account combination $(a_1, b_1)$ in account combinations $(a_i, b_i)$, bags of words with which the account $a_1$ publishes information include a bag of words 1 (with 15 occurrences), a bag of words 2 (with 21 occurrences), a bag of words 3 (with 12 occurrences), and a bag of words 4 (with 5 occurrences), and bags of words with which the account $b_1$ publishes information include the bag of words 1 (with 15 occurrences), the bag of words 2 (with 21 occurrences), the bag of words 4 (with 12 occurrences), and a bag of words 5 (with 8 occurrences); according to a sequence of the bag of words 1, the bag of words 2, the bag of words 3, the bag of words 4, and the bag of words 5, a bag-of-words vector of the account $a_1$ may be (15, 21, 12, 5, 0), and a bag-of-words vector of the account $b_1$ may be (15, 21, 0, 12, 8); an inner product of the bag-of-words vector of the account $a_1$ and the bag-of-words vector of the account $b_1$ is (15, 21, 12, 5, 0)·(15, 21, 0, 12, 8); and a cosine similarity of the two vectors may be obtained by computing cosine values of the two vectors.

When bag-of-words vectors with which all accounts in the account combination publish information are obtained, an embodiment of the present invention may further provide another implementation manner, which specifically includes:

A. Process, by using a natural language processing technology, information published by an account in the test set or training set account combination.

Natural language processing is an important direction of the field of computer science and the field of artificial intelligence. It studies various theories and methods for effective communication between a human being and a computer by using a natural language.

B. Generate a bag-of-words vector of the account from the processed information by using a term frequency-inverse document frequency (TF-IDF) weighting model.

IF-IDF reflects importance of one word in a document set to one document, which is typically used as a weight factor in text data mining and information extraction. In a given document, term frequency (Term Frequency, TF) refers to a frequency at which a given word appears in the document. Inverse document frequency (Inverse Document Frequency, IDF) is a measure of general importance of a word. The IDF of a specific word may be obtained by dividing the total number of documents by the number of documents that contain the word and then acquiring a logarithm of the obtained quotient. A final result is the IDF of this specific word.

Step S103: Input the at least two different features that are of each account in the test set account combination and are correlated with behavioral data of a user of the account into a classification and prediction model that is already established, to obtain a predicted value or a set of predicted values, which may belong to a user, of the test set account combination.

The classification and prediction model is already established, and when the classification and prediction model is being established, accounts in the training set is used to generate a training set account combination, where accounts in each training set account combination belong to a user, and when the training set is trained, extracted features are at least two different features that are of each account in the training set account combination and are correlated with behavioral data of a user of the account. As such, when the at least two different features that are of each account in the test set account combination and are correlated with behavioral data of a user of the account are inputted into the classification and prediction model that is already established, the predicted value or the set of predicted values, which may belong to a user, of the test set account combination is obtained. When only one test set account combination exists, a predicted value, which may belong to a user, of the test set account combination may be obtained; and when there are multiple test set account combinations, a set of predicted values, which may belong to a user, of the test set account combinations may be obtained.

Step S104: Perform computation on the predicted value or the set of predicted values of the test set account combination by using an association algorithm, and output a computed prediction result for the test set account combination.

The association algorithm refers to a process in which correlation between predicted values of a test set account combination is computed to obtain a final prediction result for the test set account combination, that is, whether the test set account combination belongs or does not belong to a user.

In the implementation manner of the present invention, at least two different features that are of each account in a test set account combination and are correlated with behavioral data of a user of the account are extracted; the at least two different features that are of each account in the test set account combination and are correlated with behavioral data of a user of the account are inputted into a classification and prediction model that is already established, to obtain a predicted value or a set of predicted values, which may belong to a user, of the test set account combination; and computation is performed on the predicted value or the set of predicted values of the test set account combination by using an association algorithm, and a computed prediction result for the test set account combination is outputted. Because the extracted features are at least two different features that are correlated with behavioral data of a user of the account, user information can be greatly enriched, which makes a final prediction result more accurate. In addition, using the number of common adjacent elements, the Jaccard similarity coefficient, the Adamic/Adar measure, and like indictors can extend a conventional definition manner in the prior art.

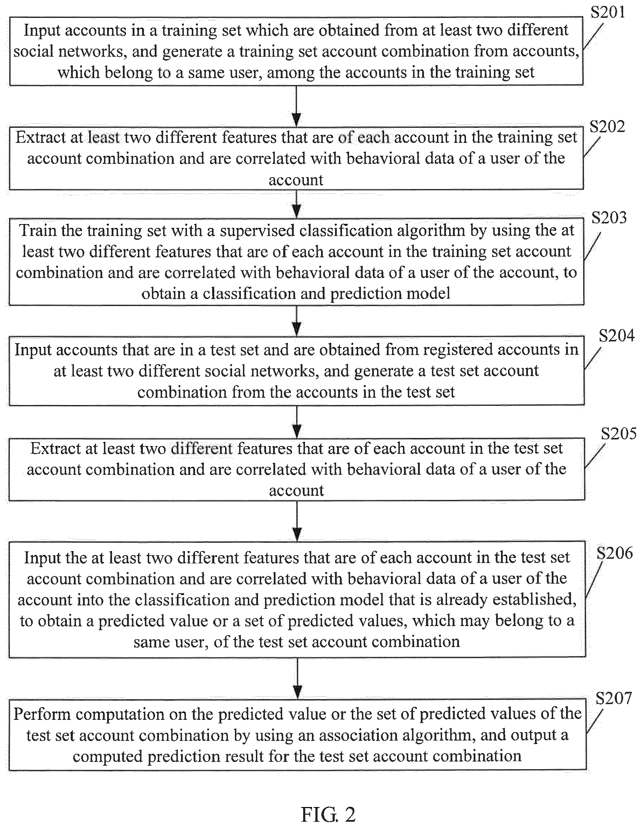

Referring to FIG. 2, FIG. 2 is a flowchart of another implementation manner of the method for identifying a user in multiple social networks according to the present invention. This implementation manner is essentially the as the implementation manner in FIG. 1. For similarities, please refer to FIG. 1 and corresponding text description, and for differences, please refer to the following content, including mainly step S201, step S202 and step S203, where specific content includes:

Step S201: Input accounts in a training set which are obtained from at least two different social networks, and generate a training set account combination from accounts, which belong to a user, among the accounts in the training set.

The accounts in the training set come from registered accounts in at least two different social networks, that is, the accounts in the training set and those in the test set have sources. Firstly, the accounts in the training set are obtained from the registered accounts in the at least two different social networks, and after the accounts in the training set are inputted, the training set account combination is generated from the accounts in the training set, so as to predict whether accounts in the training set account combination belong to a user.

Step S202: Extract at least two different features that are of each account in the training set account combination and are correlated with behavioral data of a user of the account.

A feature correlated with behavioral data of a user of an account refers to a feature that is correlated with data with respect to behavioral habits or behavior characteristics of the user of the account in a social network, where the behavioral data of a user of an account includes: data with respect to time ranges when the user logs in to a social network, data with respect to locations where the user logs in to a social network, data with respect to language habits in which the user publishes comments in a social network, data with respect to friends followed by the user, data with respect to points of interest of the user, and the like. In general, behavioral habits or behavior characteristics of one user are often highly fixed and highly personalized. If features represented by data with respect to behavioral habits or behavior characteristics of users corresponding to accounts in different social networks are very similar, it is most likely that the accounts in the different social networks belong to a user.

Therefore, by extracting the at least two different features that are of each account in the training set account combination and are correlated with behavioral data of a user of the account, a classification and prediction model can be established.

Step S203: Train the training set with a supervised classification algorithm by using the at least two different features that are of each account in the training set account combination and are correlated with behavioral data of a user of the account, to obtain a classification and prediction model.

The supervised classification algorithm is a kind of machine learning classification algorithm, including but not limited to: support vector machines (Support Vector Machines, SVM), and logistic regression (Logistic Regression, LR).

Step S204: Input accounts that are in a test set and are obtained from registered accounts in at least two different social networks, and generate a test set account combination from the accounts in the test set.

Step S205: Extract at least two different features that are of each account in the test set account combination and are correlated with behavioral data of a user of the account.

Step S206: Input the at least two different features that are of each account in the test set account combination and are correlated with behavioral data of a user of the account into the classification and prediction model that is already established, to obtain a predicted value or a set of predicted values, which may belong to a user, of the test set account combination.

Step S207: Perform computation on the predicted value or the set of predicted values of the test set account combination by using an association algorithm, and output a computed prediction result for the test set account combination.

It should be noted that step S201, step S202 and step S203 only need to be performed before step S206, for example, step S201, step S202 and step S203 may be performed simultaneously with step S204 and step S205, without being limited to the sequence defined in this implementation manner. No further details are described herein.

In the implementation manner of the present invention, at least two different features that are of each account in a test set account combination and are correlated with behavioral data of a user of the account are extracted; the at least two different features that are of each account in the test set account combination and are correlated with behavioral data of a user of the account are inputted into a classification and prediction model that is already established, to obtain a predicted value or a set of predicted values, which may belong to a user, of the test set account combination; and computation is performed on the predicted value or the set of predicted values of the test set account combination by using an association algorithm, and a computed prediction result for the test set account combination is outputted. Because the extracted features are at least two different features that are correlated with behavioral data of a user of the account, user information can be greatly enriched, which makes a final association result more accurate.

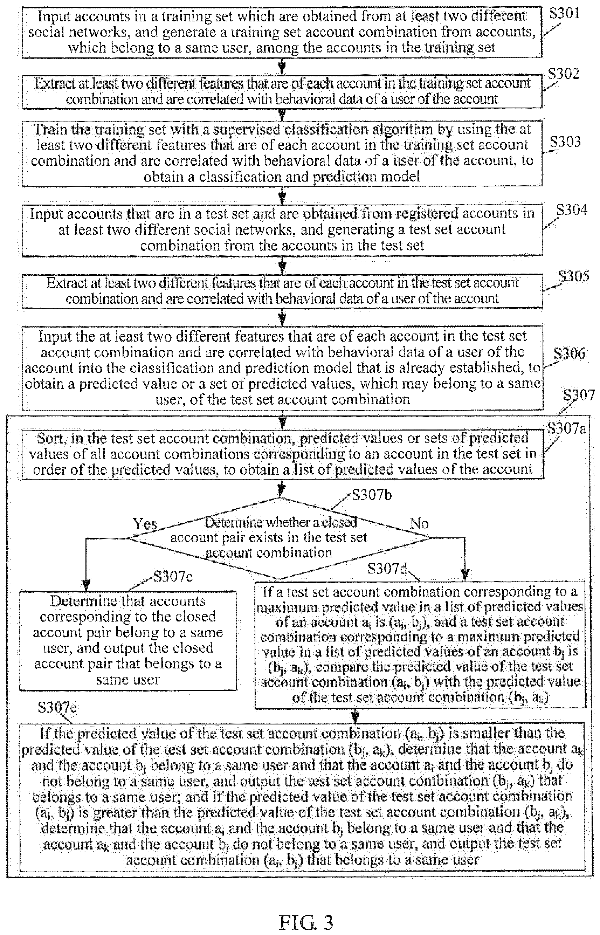

Referring to FIG. 3, FIG. 3 is a flowchart of still another implementation manner of the method for identifying a user in multiple social networks according to the present invention. This implementation manner is essentially the as the implementation manners in FIG. 1 and FIG. 2. For similarities, please refer to FIG. 1 and FIG. 2 and corresponding text description, and for differences, please refer to the following content. Mainly step S307a, step S307b, step S307c and step S307d are included, where specific content includes:

Step S301: Input accounts in a training set which are obtained from at least two different social networks, and generate a training set account combination from accounts, which belong to a user, among the accounts in the training set.

Step S302: Extract at least two different features that are of each account in the training set account combination and are correlated with behavioral data of a user of the account.

Step S303: Train the training set with a supervised classification algorithm by using the at least two different features that are of each account in the training set account combination and are correlated with behavioral data of a user of the account, to obtain a classification and prediction model.

Step S304: Input accounts that are in a test set and are obtained from registered accounts in at least two different social networks, and generate a test set account combination from the accounts in the test set.

Step S305: Extract at least two different features that are of each account in the test set account combination and are correlated with behavioral data of a user of the account.

Step S306: Input the at least two different feature s that are of each account in the test set account combination and are correlated with behavioral data of a user of the account into the classification and prediction model that is already established, to obtain a predicted value or a set of predicted values, which may belong to a user, of the test set account combination.

Step S307: Perform computation on the predicted value or the set of predicted values of the test set account combination by using an association algorithm, and output a computed prediction result for the test set account combination.

Step S307 specifically includes: performing computation on the predicted value or the set of predicted values of the test set account combination by using a multi-network approach MNA algorithm, and outputting the computed prediction result for the test set account combination. Specifically, the following substeps are included:

Substep S307a: Sort, in the test set account combination, predicted values or sets of predicted values of all account combinations corresponding to an account in the test set in order of the predicted values, to obtain a list of predicted values of the account.

Substep S307b: Determine whether a closed account pair exists in the test set account combination. If a closed account pair exists, go to step S307c, and if no closed account pair exists, go to step S307d.

Substep S307c: If a closed account pair exists in the test set account combination, determine that accounts corresponding to the closed account pair belong to a user, and output the closed account pair that belongs to a user, where the closed account pair meets the following conditions: a test set account combination corresponding to a maximum predicted value in a list of predicted values of the account $a_i$ is $(a_i, b_j)$, and a test set account combination corresponding to a maximum predicted value in a list of predicted values of the account $b_j$ is $(b_j, a_i)$.

Substep S307d: If the test set account combination corresponding to the maximum predicted value in the list of predicted values of the account $a_i$ is $(a_i, b_j)$, and the test set account combination corresponding to the maximum predicted value in the list of predicted values of the account $b_j$ is $(b_j, a_k)$, compare the predicted value of the test set account combination $(a_i, b_j)$ with the predicted value of the test set account combination $(b_j, a_k)$.

Substep S307e: If the predicted value of the test set account combination $(a_i, b_j)$ is smaller than the predicted value of the test set account combination $(b_j, a_k)$, determine that the account $a_k$ and the account $b_j$ belong to a user and that the account $a_i$ and the account $b_j$ do not belong to a user, and output the test set account combination $(b_j, a_k)$ that belongs to a user; and if the predicted value of the test set account combination $(a_i, b_j)$ is greater than the predicted value of the test set account combination $(b_j, a_k)$, determine that the account $a_i$ and the account $b_j$ belong to a user and that the account $a_k$ and the account $b_j$ do not belong to a user, and output the test set account combination $(a_i, b_j)$ that belongs to a user.

The following uses an example to describe a specific implementation process of the above substep S307a, substep S307b, substep S307c, substep S307d and substep S307e in a practical application. It is assumed that there are two independent social networks A and B, and that a test set includes accounts a1, a2 and a3 in the social network A and accounts b1 and b2 in the social network B. After a prediction and classification model obtained by training is applied to the above test set, information shown in Table 1 is obtained:

**Table 1**

| Account | List of predicted values | Matching state | Inference result set A' |
|---------|--------------------------|----------------|-------------------------|
| a1 | [b1(0.8), b2(0.6)] | No | [] |
| a2 | [b1(0.7), b2(0.4)] | No | |
| a3 | [b1(0.5), b2(0.2)] | No | |
| bl | [a1(0.8), a2(0.7), a3(0.5)] | No | |
| b2 | [a1(0.6), a2(0.4), a3(0.2)] | No | |

According to the list of predicted values [b1(0.8), b2(0.6)] of the account a1, a possibility that (a1, b1) belongs to user and a possibility that (a1, b2) belongs to a user are 0.8 and 0.6 respectively, and the two values are prediction results of the classification model. The list of predicted values of each account is sorted in descending order of prediction results of various account combinations. The "matching state" describes whether an account is already matched to another account in another network, that is, whether the account appears in the "inference result set A'". The "inference result set A'" includes all account combinations that are deduced as to belong to a user and records a predicted value of each account combination. It is not hard to see that a closed account pair (a1, b1) exists in the above test set. Association computation for the above result is performed below.

**Step 1:** Obtain one account in the social network A, where the account meets conditions that a "matching state" is "No" and that "List of predicted values" is not blank. For example, the account a3 is obtained, and with respect to the account a3, the first-place account b1 in the social network B is obtained from a list of predicted values of the account a3; bl is deleted from the list of predicted values of a3, and a matching state of b1 is determined; and the matching state of b1 is "No", and then (a3, b1) is deduced as to belong to a user, and (a3, b1) is added to "Inference result set A'", and matching states of a3 and b1 are changed to "Yes". Updated information is shown in the following Table 2.

Table 2

| Account | List of predicted values | Matching state | Inference result set A' |
|---------|--------------------------|----------------|-------------------------|
| a1 | [b1(0.8), b2(0.6)] | No | **[(a3, b1)+(0.5)]** |
| $a_2$ | [b 1(0.7), b2(0.4)] | No | |
| a3 | **[b2(0.2)]** | *Yes* | |
| b1 | [a1(0.8), a2(0.7), a3(0.5)] | *Yes* | |
| b2 | [a1(0.6), a2(0.4), a3(0.2)] | No | |

**Step 2:** Obtain one account in the social network A, where the account meets conditions that a "matching state" is "No" and that "List of predicted values" is not blank. For example, the account a1 is obtained, and with respect to the account a3, the first-place account b1 in the social network B is obtained from the list of predicted values of the account a3; b1 is deleted from a list of predicted values of a1, and a matching state of b1 is determined; the matching state of b1 is "Yes", it is found from "Inference result set A'" that b1 is matched to a3 with a predicted value 0.5, and a predicted value of (a1, b1) is compared with the predicted value of (a3, b1); and a result is that the predicted value of (a1, b1) is greater than the predicted value of (a3, b1), and then the following operations are performed:

a) deleting (a3, b1) from "Inference result set A'";
b) adding (a1, b1) to "Inference result set A'";
c) updating the matching state of a3 to "No";
c) updating the matching state of a1 to "Yes".

Updated information is now shown in the following Table 3.

Table 3

| Account | List of predicted values | Matching state | Inference result set A' |
|---------|--------------------------|----------------|-------------------------|
| a1 | [b2(0.6)] | Yes | **[(a1, b1)+(0.8)]** |
| a2 | [b1(0.7), b2(0.4)] | No | |
| a3 | **[b2(0.2)]** | *No* | |
| b1 | [a1(0.8), a2(0.7), a3(0.5)] | *Yes* | |
| b2 | [a1(0.6), a2(0.4), a3(0.2)] | No | |

**Step 3:** Obtain one account in the social network A, where the account meets conditions that a "matching state" is "No" and that "List of predicted values" is not blank. For example, the account a2 is obtained, and with respect to the account a2, the first-place account b1 in the social network B is obtained from the list of predicted values of the account a2; b1 is deleted from a list of predicted values of a2, and a matching state of b1 is determined; the matching state of b1 is "Yes", and it is found from "Inference result set A'" that b1 is matched to a1 with a predicted value 0.8, and the predicted value of (a1, b1) is compared with a predicted value of (a2, b1); and a result is that the predicted value of (a1, b1) is greater than the predicted value of (a2, b1), and then a next-step operation is performed. Updated information is now shown in the following Table 4:

**Table 4**

| Account | List of predicted values | Matching state | Inference result set A' |
|---------|--------------------------|----------------|-------------------------|
| al | [b2(0.6)] | Yes | **[(a1, b1)+(0.8)]** |
| a2 | [b2(0.4)] | No | |
| a3 | **[b2(0.2)]** | *No* | |
| b1 | [a1(0.8), a2(0.7), a3(0.5)] | *Yes* | |
| b2 | [a1(0.6), a2(0.4), a3(0.2)] | No | |

**Step 4:** Obtain one account in the social network A, where the account meets conditions that a "matching state" is "No" and that "List of predicted values" is not blank. For example, the account a2 is obtained, and with respect to the account a2, the first-place account b2 in the social network B is obtained from the list of predicted values of the account a2; b2 is deleted from the list of predicted values of a2, and a matching state of b2 is determined; and the matching state of b2 is "No", and then (a2, b2) is deduced as to belong to a user, and (a2, b2) is added to "Inference result set A'", and the matching states of a2 and b2 are changed to "Yes". Updated information is now shown in the following Table 5.

**Table 5**

| Account | List of predicted values | Matching state | Inference result set A' |
|---------|--------------------------|----------------|-------------------------|
| a1 | [b2(0.6)] | Yes | **[(a1, b1)+(0.8)]** |
| a2 | [] | Yes | **[(a2, b2)+(0.4)]** |
| a3 | **[b2(0.2)]** | *No* | |
| b1 | [a1(0.8), a2(0.7), a3(0.5)] | *Yes* | |
| b2 | [a1(0.6), a2(0.4), a3(0.2)] | Yes | |

**Step 5:** Obtain one account in the social network A, where the account meets conditions that a "matching state" is "No" and that "List of predicted values" is not blank. Now, only the account a3 can be obtained, and with respect to the account a3, the first-place account b2 in the social network B is obtained from the list of predicted values of the account a3; b2 is deleted from the list of predicted values of a3, and a matching state of b2 is determined; the matching state of the b2 is "Yes", and it is found from "Inference result set A'" that b2 is matched to a2 with a predicted value 0.4, and the predicted value of (a2, b2) is compared with a predicted value of (a3, b2); and a result is that the predicted value of (a2, b2) is greater than the predicted value of (a3, b2), and then a next-step operation is performed. Updated information is now shown in the following Table 6.

**Table 6**

| Account | List of predicted values | Matching state | Inference result set A' |
|---------|--------------------------|----------------|-------------------------|
| a1 | [b2(0.6)] | Yes | **[(a1, b1)+(0.8)]** |
| a2 | [] | Yes | **[(a2, b2)+(0.4)]** |
| a3 | [] | *No* | |
| b1 | [a1(0.8), a2(0.7), a3(0.5)] | *Yes* | |
| b2 | [a1(0.6), a2(0.4), a3(0.2)] | Yes | |

Step 6: Now, no account exists, in the social network A, which meets both conditions that a "matching state" is "No" and that "List of predicted values" is not blank, and the operation is ended. The final result is that (a1, b1) belongs to a user and (a2, b2) belongs to a user. Now, it can be seen that the closed account pair (a1, b1) appears in the set A', and the set A' is stable.

In the implementation manner of the present invention, at least two different features that are of each account in a test set account combination and are correlated with behavioral data of a user of the account are extracted; the at least two different features that are of each account in the test set account combination and are correlated with behavioral data of a user of the account are inputted into a classification and prediction model that is already established, to obtain a predicted value or a set of predicted values, which may belong to a user, of the test set account combination; and computation is performed on the predicted value or the set of predicted values of the test set account combination by using an association algorithm, and a computed prediction result for the test set account combination is outputted. Because the extracted features are at least two different features that are correlated with behavioral data of a user of the account, user information can be greatly enriched, which makes a final association result more accurate. In addition, an optimal global matching result can be obtained rapidly by using a MAN algorithm.

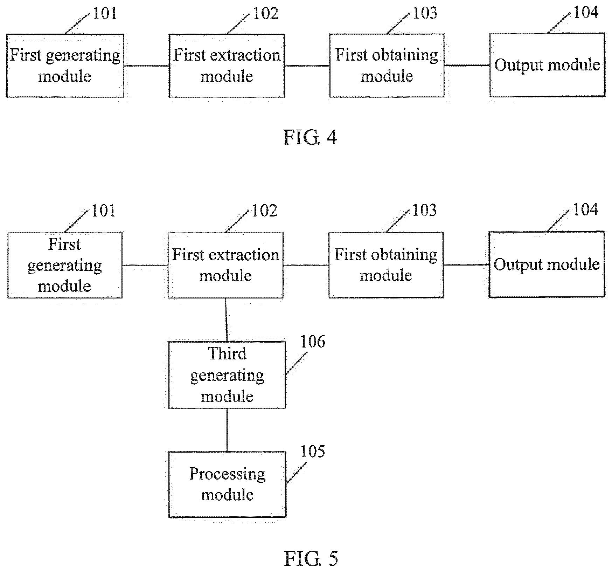

Referring to FIG. 4 and FIG. 5, FIG. 4 and FIG. 5 are structural diagrams of two implementation manners of an apparatus for identifying a user in multiple social networks according to the present invention, where the apparatus includes: a first generating module 101, a first extraction module 102, a first obtaining module 103 and an output module 104.

It should be noted that the apparatus in this implementation manner can perform the steps in FIG. 1 to FIG. 3.

It is defined that a user has only one account in one social network, that the number of accounts in an account combination equals the number of social networks, and that each account in the account combination comes from a different social network.

Social networks are increasingly popular and of increasing types, such as, Facebook, Twitter, WeChat, and Foursquare. Most of the social networks are independent of one another. Many users have registered accounts in different social networks. In the prior art, a technical solution already exists for indentifying that different accounts in one social network belong to a user, and therefore, it is defined that one user has only one account in one social network, that the number of accounts in an account combination equals the number of social networks, and that each account in the account combination comes from a different social network.

The first generating module 101 is configured to, after accounts that are in a test set and are obtained from registered accounts in at least two different social networks are inputted, generate a test set account combination from the accounts in the test set.

The accounts in the test set come from registered accounts in at least two different social networks, and it is also unknown whether the accounts are registered by a user in the at least two different social networks. Firstly, the accounts in the test set are obtained from the registered accounts in the at least two different social networks, and after the accounts in the test set are inputted, the test set account combination is generated from the accounts in the test set, so as to predict whether accounts in the test set account combination belong to a user.

The first extraction module 102 is configured to, after the first generating module 101 generates the test set account combination, extract at least two different features that are of each account in the test set account combination and are correlated with behavioral data of a user of the account.

A feature correlated with behavioral data of a user of an account refers to a feature that is correlated with data with respect to behavioral habits or behavior characteristics of the user of the account in a social network. In general, behavioral habits or behavior characteristics of one user are often highly fixed and highly personalized. If features represented by data with respect to behavioral habits or behavior characteristics of users corresponding to accounts in different social networks are very similar, it is most likely that the accounts in the different social networks belong to a user.

As such, by extracting the at least two different features that are of each account in the test set account combination and are correlated with behavioral data of a user of the account, whether the accounts in the test set account combination belong to a user can be predicted.

The at least two different features that are correlated with behavioral data of a user of the account include but are not limited to: a social feature of an account in the account combination, a spatial feature of account publishing information in the account combination, a temporal feature of account publishing information in the account combination, and a text feature of account publishing information in the account combination.

The social feature of an account in the account combination mainly describes a friendship status or friendship feature of a user corresponding to the account. The social feature of an account in the account combination includes: the number of common adjacent elements, a Jaccard Jaccard similarity coefficient and an Adamic/Adar Adamic/Adar measure. The number of common adjacent elements refers to the number of common friends of accounts in the account combination, where accounts having the common friends are in a training set; the Jaccard similarity coefficient refers to a ratio of the number of common friends of accounts in the account combination to the number of all friends of accounts in the account combination; and the Adamic/Adar measure refers to influence of the common friends of accounts in the account combination on respective social networks. That is, the Adamic/Adar measure equals

$$\sum \log^{-1} \frac{\text{The number of all friends of a}_m \text{ and b}_m}{2}$$ where $(a_m, b_m)$ is any one of common adjacent elements

that belong to $a_i$ and $b_i$.

For example, a social network A and a social network B are different social networks, the social network A has three user accounts $a_i$, namely, $a_1$, $a_2$ and $a_3$, the social network B has four user accounts $b_i$, namely, $b_1$, $b_2$ $b_3$ and $b_4$,

the account $a_1$ has friends $a_2$ and $a_3$, and the account $b_1$ has friends $b_2$, $b_3$, and $b_4$, and it is known from a training set that ($a_2$, $b_2$) belongs to a user and ($a_3$, $b_3$) belongs to a user. Therefore, the number of common friends of the account $a_1$ and the account $b_1$ is 2, that is, the number of common adjacent elements is 2, and because the number of all friends of the account $a_1$ and the account $b_1$ is 5, the Jaccard similarity coefficient is 2/5=0.4. If the number of friends of the account $a_2$ and the account $b_2$ is 6, and the number of friends of the account $a_3$ and the account $b_3$ is 4, the Adamic/Adar measure is $\log^{-1}3 + \log^{-1}2$.

The spatial feature of account publishing information in the account combination mainly refers to a feature with respect to locations where the account publishes information, for example: where the account often publishes information, whether at home or in a company or at a public cybercafé; and a location where the account mostly publishes information. In general, when a user logs in to a social network and publishes information, information in other social networks is updated simultaneously. If there are two accounts in two different social networks, and it is found that the two accounts often publish information at a location, it is most likely that the two accounts in the two different social networks belong to a user.

The spatial feature of account publishing information in the account combination includes but is not limited to: the number of common locations of all account publishing information in the account combination, a cosine similarity of a location set of all account publishing information in the account combination, and an average distance of the location set of all account publishing information in the account combination. The cosine similarity is used to compute similarity of two vectors. When a cosine value gets closer to 1, it indicates that an included angle between the two vectors gets closer to 0 degree, that is, the two vectors are more similar. This is called "cosine similarity". For example, with respect to one account combination ($a_1$, $b_1$) in account combinations ($a_i$, $b_i$), if locations where the account $a_1$ publishes information include a location 1 (with 4 information publications), a location 2 (with 7 information publications), and a location 3 (with 2 information publications), and locations where the account $b_1$ publishes information include the location 1 (with 4 information publications), the location 2 (with 7 information publications), a location 4 (with 1 information publication), and a location 5 (with 1 information publication), then the number of common locations of the account $a_1$ and the account $b_1$ for information publication is 2; according to a sequence of the location 1, the location 2, the location 3, the location 4, and the location 5, a vector of the account $a_1$ may be (4, 7, 2, 0, 0), and a vector of the account $b_1$ may be (4, 7, 0, 1, 1), and a cosine similarity of the two vectors can be obtained by computing cosine values of the two vectors; according to the three locations of the account $a_1$ (the location 1, the location 2, and the location 3), an average distance of a location set of the account $a_1$ may be obtained; and according to the four locations of the account $b_1$ (the location 1, the location 2, the location 4, and the location 5), an average distance of a location set of the account $b_1$ may be obtained.

The temporal feature of account publishing information in the account combination mainly refers to a feature with respect to time ranges in which the account publishes information. The temporal feature of account publishing information in the account combination includes but is not limited to: the number of common time ranges of all account publishing information in the account combination, and a cosine similarity of a time range set of all account publishing information in the account combination. For example, with respect to one account combination ($a_1$, $b_1$) in account combinations ($a_i$, $b_i$), if time ranges in which the account $a_1$ publishes information include a time range 1 (with 5 information publications), a time range 2 (with 8 information publications), and a time range 3 (with 2 information publications), and time ranges in which the account $b_1$ publishes information include the time range 1 (with 5 information publications), the time range 2 (with 8 information publications), a time range 4 (with 1 information publication), and a time range 5 (with 1 information publication), then the number of common time ranges of the account $a_1$ and the account $b_1$ for information publication is 2; according to a sequence of the time range 1, the time range 2, the time range 3, the time range 4, and the time range 5, a vector of the account $a_1$ may be (5, 8, 2, 0, 0), and a vector of the account $b_1$ may be (5, 8, 0, 1, 1), and a cosine similarity of the two vectors may be obtained by computing cosine values of the two vectors.

The text feature of account publishing information in the account combination refers to some language habits in which the account publishes information. The text feature of account publishing information in the account combination includes but is not limited to: an inner product of bag-of-words vectors of all account publishing information in the account combination, and a cosine similarity of the bag-of-words vectors of all account publishing information in the account combination.

Bag of words (Bag of words): In information retrieval, a bag of words assumes that, with respect to a text, its word sequence, grammar or syntax are ignored and the text is regarded merely as a word set or a combination of words, and that each word in the text occurs independently and is independent of occurrence of other words. In other words, when an author of the text chooses a word in any one position, the choice is made independently under no influence of a previous sentence. Inner product is also referred to as scalar product or dot product. Assuming there are n-dimensional vectors $\alpha$ and $\beta$, the inner product of vectors is an inner product of the vectors $\alpha$ and $\beta$, that is, $\alpha \cdot \beta$. A simple example is used to describe one manner of obtaining a bag-of-words vector: with respect to one account combination ($a_1$, $b_1$) in account combinations ($a_i$, $b_i$), bags of words with which the account $a_1$ publishes information include a bag of words 1 (with 15 occurrences), a bag of words 2 (with 21 occurrences), a bag of words 3 (with 12 occurrences), and a bag of words 4 (with 5 occurrences), and bags of words with which the account $b_1$ publishes information include the bag of words 1 (with 15 occurrences), the bag of words 2 (with 21 occurrences), the bag of words 4 (with 12 occurrences), and a bag of words 5 (with 8 occurrences); according to a sequence of the bag of words 1, the bag of words 2, the bag of words 3, the bag of words 4, and the bag of words 5, a bag-of-words vector of the account $a_1$ may be (15, 21, 12, 5, 0), and a bag-of-words vector of the account $b_1$ may be (15, 21, 0, 12, 8); an inner product of the bag-of-words vector of the account $a_1$ and the bag-of-words vector of the account $b_1$ is (15, 21, 12, 5, 0)·(15, 21, 0, 12, 8); and a cosine similarity of the two vectors may be obtained by computing cosine values of the two vectors.

When bag-of-words vectors with which all accounts in the account combination publish information are obtained, an embodiment of the present invention may further provide another implementation manner. That is, the apparatus further includes: a processing module 105 and a third generating module 106, as shown in FIG. 5.

The processing module 105 is configured to process, by using a natural language processing technology, information published by an account in the test set or training set account combination.

Natural language processing is an important direction of the field of computer science and the field of artificial intelligence. It studies various theories and methods for effective communication between a human being and a computer by using a natural language.

The third generating module 106 is configured to, after the processing module 105 processes the information published by an account in the test set or training set account combination, generate a bag-of-words vector of the account from the processed information by using a term frequency-inverse document frequency (TF-IDF) weighting model.

IF-IDF reflects importance of one word in a document set to one document, which is typically used as a weight factor in text data mining and information extraction. In a given document, term frequency (Term Frequency, TF) refers to a frequency at which a given word appears in the document. Inverse document frequency (Inverse Document Frequency, IDF) is a measure of general importance of a word. The IDF of a specific word may be obtained by dividing the total number of documents by the number of documents that contain the word and then acquiring a logarithm of the obtained quotient. A final result is the IDF of this specific word.

The first obtaining module 103 is configured to, after the first extraction module 102 extracts the at least two different features that are of each account in the test set account combination and are correlated with behavioral data of a user of the account, input the extracted features into a classification and prediction model that is already established, to obtain a predicted value or a set of predicted values, which may belong to a user, of the test set account combination.

The classification and prediction model is already established, and when the classification and prediction model is being established, accounts in the training set is used to generate a training set account combination, where accounts in each training set account combination belong to a user, and when the training set is trained, extracted features are at least two different features that are of each account in the training set account combination and are correlated with behavioral data of a user of the account. As such, when the at least two different features that are of each account in the test set account combination and are correlated with behavioral data of a user of the account arc inputted into the classification and prediction model that is already established, the predicted value or the set of predicted values, which may belong to a user, of the test set account combination is obtained. When only one test set account combination exists, a predicted value, which may belong to a user, of the test set account combination may be obtained; and when there are multiple test set account combinations, a set of predicted values, which may belong to a user, of the test set account combinations may be obtained.

The output module 104 is configured to, after the first obtaining module 103 obtains the predicted value or the set of predicted values, which may belong to a user, of the test set account combination, perform computation on the predicted value or the set of predicted values of the test set account combination by using an association algorithm, and output a computed prediction result for the test set account combination.

The association algorithm refers to a process in which correlation between predicted values of a test set account combination is computed to obtain a final prediction result for the test set account combination, that is, whether the test set account combination belongs or does not belong to a user.

In the implementation manner of the present invention, at least two different features that are of each account in a test set account combination and are correlated with behavioral data of a user of the account are extracted; the at least two different features that are of each account in the test set account combination and are correlated with behavioral data of a user of the account are inputted into a classification and prediction model that is already established, to obtain a predicted value or a set of predicted values, which may belong to a user, of the test set account combination; and computation is performed on the predicted value or the set of predicted values of the test set account combination by using an association algorithm, and a computed prediction result for the test set account combination is outputted. Because the extracted features are at least two different features that are correlated with behavioral data of a user of the account, user information can be greatly enriched, which makes a final association result more accurate. In addition, using the number of common adjacent elements, the Jaccard similarity coefficient, the Adamic/Adar measure, and like indicators can extend a conventional definition manner in the prior art.

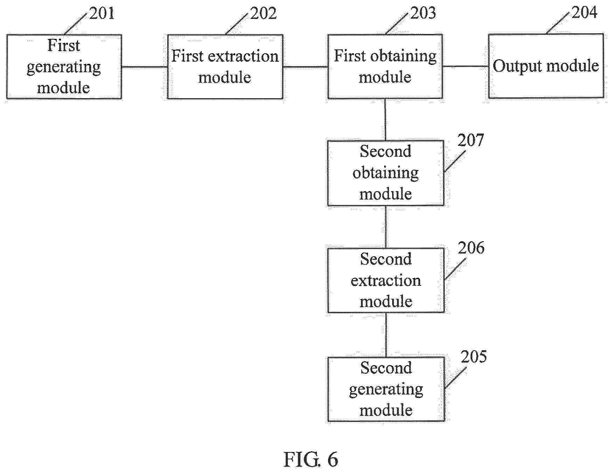

Referring to FIG. 6, FIG. 6 is a structural diagram of yet another implementation manner of the apparatus for identifying a user in multiple social networks according to the present invention. The apparatus in this implementation manner is essentially the as the apparatuses in FIG. 4 and FIG. 5. For similarities, please refer to FIG. 4 and FIG. 5 and corresponding text description. A difference lies in that, in addition to a first generating module 201, a first extraction module 202, a first obtaining module 203 and an output module 204, the apparatus further includes a second generating module 205, a second extraction module 206 and a second obtaining module 207.

It should be noted that the apparatus in this implementation manner can perform the steps in FIG. 2.

The first generating module 201 is configured to, after accounts that are in a test set and are obtained from registered accounts in at least two different social networks are inputted, generate a test set account combination from the accounts in the test set.

The first extraction module 202 is configured to, after the first generating module 201 generates the test set account combination, extract at least two different features that are of each account in the test set account combination and are correlated with behavioral data of a user of the account.

The first obtaining module 203 is configured to, after the first extraction module 202 extracts the at least two different features that are of each account in the test set account combination and are correlated with behavioral data of a user of the account, input the extracted features into a classification and prediction model that is already established, to obtain a predicted value or a set of predicted values, which may belong to a user, of the test set account combination.

The output module 204 is configured to, after the first obtaining module 203 obtains the predicted value or the set of predicted values, which may belong to a user, of the test set account combination, perform computation on the predicted value or the set of predicted values of the test set account combination by using an association algorithm, and output a computed prediction result for the test set account combination.

The second generating module 205 is configured to, after accounts in a training set which are obtained from registered accounts in at least two different social networks are inputted, generate a training set account combination from accounts, which belong to a user, among the accounts in the training set.

The accounts in the training set come from registered accounts in at least two different social networks, that is, the accounts in the training set and those in the test set have sources. Firstly, the accounts in the training set are obtained from the registered accounts in the at least two different social networks, and after the accounts in the training set are inputted, the training set account combination is generated from the accounts in the training set, so as to predict whether accounts in the training set account combination belong to a user.

The second extraction module 206 is configured to, after the second generating module 205 generates the training set account combination, extract at least two different features that are of each account in the training set account combination and are correlated with behavioral data of a user of the account.

A feature correlated with behavioral data of a user of an account refers to a feature that is correlated with data with respect to behavioral habits or behavior characteristics of the user of the account in a social network, where the behavioral data of a user of an account includes: data with respect to time ranges when the user logs in to a social network, data with respect to locations where the user logs in to a social network, data with respect to language habits in which the user publishes comments in a social network, data with respect to friends followed by the user, data with respect to points of interest of the user, and the like. In general, behavioral habits or behavior characteristics of one user are often highly fixed and highly personalized. If features represented by data with respect to behavioral habits or behavior characteristics of users corresponding to accounts in different social networks are very similar, it is most likely that the accounts in the different social networks belong to a user.

Therefore, by extracting the at least two different features that are of each account in the training set account combination and are correlated with behavioral data of a user of the account, a classification and prediction model can be established.

The second obtaining module 207 is configured to, after the second extraction module 206 extracts the at least two different features that are of each account in the training set account combination and are correlated with behavioral data of a user of the account, train the training set with a supervised algorithm by using the extracted features, to obtain the classification and prediction model.

The supervised classification algorithm is a kind of machine learning classification algorithm, including but not limited to: support vector machines and logistic regression.

In the implementation manner of the present invention, at least two different features that are of each account in a test set account combination and are correlated with behavioral data of a user of the account are extracted; the at least two different features that are of each account in the test set account combination and are correlated with behavioral data of a user of the account are inputted into a classification and prediction model that is already established, to obtain a predicted value or a set of predicted values, which may belong to a user, of the test set account combination; and computation is performed on the predicted value or the set of predicted values of the test set account combination by using an association algorithm, and a computed prediction result for the test set account combination is outputted. Because the extracted features are at least two different features that are correlated with behavioral data of a user of the account, user information can be greatly enriched, which makes a final association result more accurate.

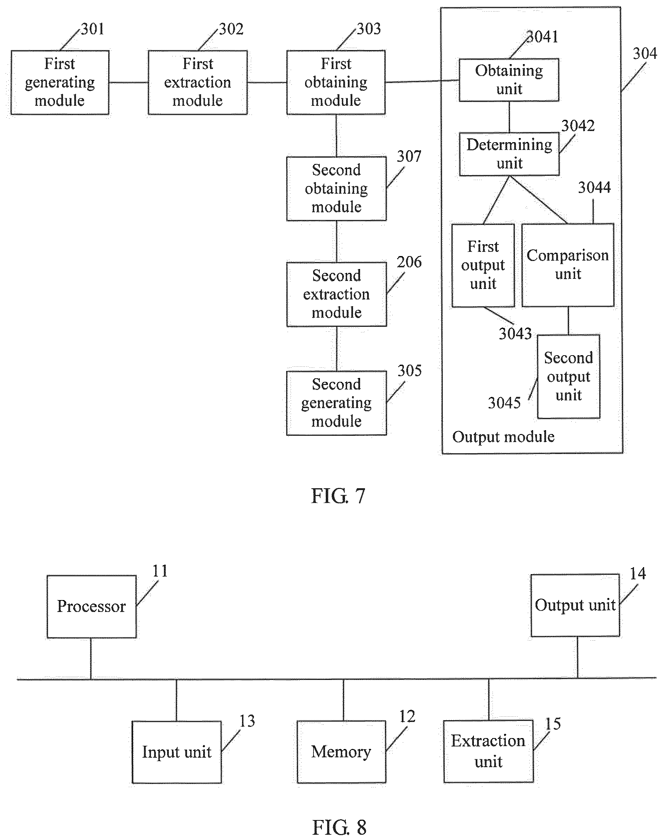

Referring to FIG 7, FIG 7 is a structural diagram of yet another implementation manner of the apparatus for identifying a user in multiple social networks according to the present invention. The apparatus in this implementation manner is essentially the as the apparatuses in FIG. 4, FIG 5 and FIG 6. For similarities, please refer to FIG. 4, FIG 5 and FIG. 6 and corresponding text description. A difference lies in that, in the apparatus, in addition to a first generating module 301, a first extraction module 302, a first obtaining module 303 and an output module 304, a second generating module 305, a second extraction module 306 and a second obtaining module 307, the output module 304 further includes an obtaining unit 3041, a determining unit 3042, a first output unit 3043, a comparison unit 3044 and a second output unit 3045.

It should be noted that the apparatus in this implementation manner can perform the steps in FIG. 3.

The first generating module 301 is configured to, after accounts that are in a test set and are obtained from registered accounts in at least two different social networks are inputted, generate a test set account combination from the accounts in the test set.

The first extraction module 302 is configured to, after the first generating module 301 generates the test set account combination, extract at least two different features that are of each account in the test set account combination and are correlated with behavioral data of a user of the account.

The first obtaining module 303 is configured to, after the first extraction module 302 extracts the at least two different features that are of each account in the test set account combination and are correlated with behavioral data of the user of the account, input the extracted features into a classification and prediction model that is already established, to obtain a predicted value or a set of predicted values, which may belong to a user, of the test set account combination.

The output module 304 is configured to, after the first obtaining module 303 obtains the predicted value or the set of predicted values, which may belong to a user, of the test set account combination, perform computation on the predicted value or the set of predicted values of the test set account combination by using an association algorithm, and output a computed prediction result for the test set account combination.

The output module 304 is specifically configured to perform computation on the predicted value or the set of predicted values of the test set account combination by using a multi-network approach MNA algorithm, and output the computed prediction result for the test set account combination.

The output module 304 includes: the obtaining unit 3041, the determining unit 3042, the first output unit 3043, the comparison unit 3044 and the second output unit 3045.

The obtaining unit 3041 is configured to sort, in the test set account combination, predicted values or sets of predicted values of all account combinations corresponding to an account in the test set in order of the predicted values, to obtain a list of predicted values of the account.

The determining unit 3042 is configured to determine whether a closed account pair exists in the test set account combination.

The first output unit 3043 is configured to, after the obtaining unit 3041 obtains the list of predicted values of the account, and when a closed account pair exists in the test set account combinations, determine that accounts corresponding to the closed account pair belong to a user, and output the closed account pair that belongs to a user, where the closed account pair meets the following conditions: a test set account combination corresponding to a maximum predicted value in a list of predicted values of an account $a_i$ is $(a_i, b_j)$, and a test set account combination corresponding to a maximum predicted value in a list of predicted values of an account $b_j$ is $(b_j, a_i)$.

The comparison unit 3044 is configured to, if the test set account combination corresponding to the maximum predicted value in the list of predicted values of the account $a_i$ is $(a_i, b_j)$, and the test set account combination corresponding to the maximum predicted value in the list of predicted values of the account $b_j$ is $(b_j, a_k)$, compare the predicted value of the test set account combination $(a_i, b_j)$ with the predicted value of the test set account combination $(b_j, a_k)$.

The second output unit 3045 is configured to, when a comparison result of the comparison unit 3044 is that the predicted value of the test set account combination $(a_i, b_j)$ is smaller than the predicted value of the test set account combination $(b_j, a_k)$, determine that the account $a_k$ and the account $b_j$ belong to a user and that the account $a_i$ and the account $b_j$ do not belong to a user, and output the test set account combination $(b_j, a_k)$ that belongs to a user; when the comparison result of the comparison unit 3044 is that the predicted value of the test set account combination $(a_i, b_j)$ is greater than the predicted value of the test set account combination $(b_j, a_k)$, determine that the account $a_i$ and the account $b_j$ belong to a user and that the account $a_k$ and the account $b_j$ do not belong to a user, and output the test set account combination $(a_i, b_j)$ that belongs to a user.

The second generating module 305 is configured to, after accounts in a training set which are obtained from registered accounts in at least two different social networks are inputted, generate a training set account combination from accounts, which belong to a user, among the accounts in the training set.

The second extraction module 306 is configured to, after the second generating module 305 generates the training set account combination, extract at least two different features that are of each account in the training set account combination and are correlated with behavioral data of a user of the account.

The second obtaining module 307 is configured to, after the second extraction module 306 extracts the at least two different features that are of each account in the training set account combination and are correlated with behavioral data of a user of the account, train the training set with a supervised algorithm by using the extracted features, to obtain the classification and prediction model.

In the implementation manner of the present invention, at least two different features that are of each account in a test set account combination and are correlated with behavioral data of a user of the account are extracted; the at least two different features that are of each account in the test set account combination and are correlated with behavioral data of a user of the account are inputted into a classification and prediction model that is already established, to obtain a predicted value or a set of predicted values, which may belong to a user, of the test set account combination; and computation is performed on the predicted value or the set of predicted values of the test set account combination by using an association algorithm, and a computed prediction result for the test set account combination is outputted. Because the extracted features are at least two different features that are correlated with behavioral data of a user of the account, user information can be greatly enriched, which makes a final association result more accurate. In addition, an optimal global matching result can be obtained rapidly by using a MAN algorithm.

Referring to FIG. 8, FIG.8 is a structural diagram of yet another implementation manner of the apparatus for identifying a user in multiple social networks according to the present invention, where the apparatus includes: a processor 11, a memory 12 coupled to the processor 11, an input unit 13, an output unit 14 and an extraction unit 15.

The input unit 13 is configured to input accounts that are in a test set and are obtained from registered accounts in at least two different social networks, and the processor 11 is configured to generate a test set account combination from the accounts in the test set and store the generated test set account combination in the memory 12.

The extraction unit 15 is configured to extract at least two different features that are of each account in the test set account combination and are correlated with behavioral data of a user of the account, and store the extracted features in the memory 12.

The processor 11 is configured to fetch the at least two different features that are of each account in the test set account combination and are correlated with behavioral data of a user of the account from the memory 12, control the input unit 13 to input the fetched features into a classification and prediction model that is already established, to obtain a predicted value or a set of predicted values, which may belong to a user, of the test set account combination.

The processor 11 is configured to perform computation on the predicted value or the set of predicted values of the test set account combination by using an association algorithm, and control the output unit 14 to output a computed prediction result for the test set account combination.

The input unit 13 is further configured to input accounts in a training set which are obtained from at least two different social networks, and the processor 11 is configured to generate a training set account combination from those in the accounts in the training set that may belong to a user, and store the generated training set account combination in the memory 12.

The extraction unit 15 is further configured to extract at least two different features that are of each account in the training set account combination and are correlated with behavioral data of a user of the account, and store the extracted features in the memory 12.

The processor 11 is configured to fetch the at least two different features that are of each account in the training set account combination and are correlated with behavioral data of a user of the account from the memory 12, and train the training set with a supervised algorithm by using the extracted features, to obtain the classification and prediction model.

The at least two different features that are correlated with behavioral data of a user of the account include: a social feature of an account in the account combination, a spatial feature of account publishing information in the account combination, a temporal feature of account publishing information in the account combination, and a text feature of account publishing information in the account combination.

The social feature of an account in the account combination includes: the number of common adjacent elements, a Jaccard Jaccard similarity coefficient and an Adamic/Adar Adamic/Adar measure. The number of common adjacent elements refers to the number of common friends of accounts in the account combination, where accounts having the common friends are in a training set; the Jaccard similarity coefficient refers to a ratio of the number of common friends of accounts in the account combination to the number of all friends of accounts in the account combination; and the Adamic/Adar measure refers to influence of the common friends of accounts in the account combination on respective social networks.

The spatial feature of account publishing information in the account combination includes: the number of common locations of all account publishing information in the account combination, a cosine similarity of a location set of all account publishing information in the account combination, and an average distance of the location set of all account publishing information in the account combination.

The temporal feature of account publishing information in the account combination includes: the number of common time ranges of all account publishing information in the account combination, and a cosine similarity of a time range set of all account publishing information in the account combination.

The text feature of account publishing information in the account combination includes: an inner product of bag-of-words vectors of all account publishing information in the account combination, and a cosine similarity of the bag-of-words vectors of all account publishing information in the account combination.

The processor 11 is further configured to process, by using a natural language processing technology, information published by an account in the test set or training set account combination; and generate a bag-of-words vector of the account from the processed information by using a term frequency-inverse document frequency (TF-IDF) weighting model.

The processor 11 is further configured to perform computation on the predicted value or the set of predicted values of the test set account combination by using a multi-network approach MNA algorithm, and control the output unit 14 to output a computed prediction result for the test set account combination.

The processor 11 is further configure to sort, in the test set account combination, predicted values or sets of predicted values of all account combinations corresponding to an account in the test set in order of the predicted values, to obtain a list of predicted values of the account; and if a closed account pair exists in the test set account combination, determine that accounts corresponding to the closed account pair belong to a user, and control the output unit 14 to output the closed account pair that belongs to a user, where the closed account pair meets the following conditions: a test set account combination corresponding to a maximum predicted value in a list of predicted values of an account $a_i$ is $(a_i, b_j)$, and a test set account combination corresponding to a maximum predicted value in a list of predicted values of an account $b_j$ is $(b_j, a_i)$

The processor 11 is further configured to, when the test set account combination corresponding to the maximum predicted value in the list of predicted values of the account $a_i$ is $(a_i, b_j)$, and the test set account combination corresponding to the maximum predicted value in the list of predicted values of the account $b_j$ is $(b_j, a_k)$, compare the predicted value of the test set account combination $(a_i, b_j)$ with the predicted value of the test set account combination $(b_j, a_k)$; if the predicted value of the test set account combination $(a_i, b_j)$ is smaller than the predicted value of the test set account combination $(b_j, a_k)$, determine that the account $a_k$ and the account $b_j$ belong to a user and that the account $a_i$ and the account $b_j$ do not belong to the user, and control the output unit 14 to output the test set account combination $(b_j, a_k)$ that belongs to a user; and if the predicted value of the test set account combination $(a_i, b_j)$ is greater than the predicted value of the test set account combination $(b_j, a_k)$, determine that the account $a_i$ and the account $b_j$ belong to a user and that the account $a_k$ and the account $b_j$ do not belong to the user, and control the output unit 14 to output the test set account combination $(a_i, b_j)$ that belongs to a user.

In the implementation manner of the present invention, at least two different features that are of each account in a test set account combination and are correlated with behavioral data of a user of the account are extracted; the at least two different features that are of each account in the test set account combination and are correlated with behavioral data of a user of the account are inputted into a classification and prediction model that is already established, to obtain a predicted value or a set of predicted values, which may belong to a user, of the test set account combination; and computation is performed on the predicted value or the set of predicted values of the test set account combination by using an association algorithm, and a computed prediction result for the test set account combination is outputted. Because the extracted features are at least two different features that are correlated with behavioral data of a user of the account, user information can be greatly enriched, which makes a final association result more accurate. In addition, using the number of common adjacent elements, a Jaccard Jaccard similarity coefficient, an Adamic/Adar measure, and like indicators can extend a conventional definition manner in the prior art; and an optimal global matching result can be obtained rapidly by using a MAN algorithm.

In the several embodiments provided in the present invention, it should be understood that the disclosed system, apparatus, and method may be implemented in other manners. For example, the described apparatus embodiments are merely exemplary. For example, the division of modules or units is merely a division of logical functions and there may be other divisions in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. The purpose of this implementation manner may be implemented by selecting a part or all of the units according to practical needs.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely implementation manners of the present invention, and are not intended to limit the patentable scope of the present invention. Any equivalent structures or equivalent procedure variations made by using the specification or accompanying drawings of the present invention, or direct or indirect applications in other related technical fields are covered in the patentable protection scope of the present invention.

**Claims**

1.  A method for identifying a same user in multiple social networks, wherein it is defined that a same user has only one account in one social network, that the number of accounts in an account combination equals the number of social networks, and that each account in the account combination comes from a different social network; and the method comprises:

    inputting (S101) accounts that are in a test set and are obtained from registered accounts in at least two different social networks, and generating at least one test set account combination from the accounts in the test set;
    extracting (S102) at least two different features that are of each account in the at least one test set account combination and are correlated with behavioral data of a user of the account;
    inputting (S201) accounts in a training set which are obtained from at least two different social networks, and generating a training set account combination from accounts, which belong to a same user, among the accounts in the training set;
    extracting (S202) at least two different features that are of each account in the training set account combination and are correlated with behavioral data of a user of the account; and
    training (S203) the training set with a supervised classification algorithm and by using the at least two different features that are of each account in the training set account combination and are correlated with behavioral data of a user of the account, to obtain a classification and prediction model;
    inputting (S103) the at least two different features that are of each account in the at least one test set account combination and are correlated with behavioral data of a user of the account into the obtained classification and prediction model, to obtain a predicted value or a set of predicted values, which belong to a same user, of the at least one test set account combination; and
    performing (SI04) computation on the predicted value or the set of predicted values of the at least one test set account combination by using an association algorithm, and outputting a computed prediction result for the at least one test set account combination;
    wherein the association algorithm refers to a process in which correlation between the predicted values of a test set account combination is computed to obtain a prediction result for the test set account combination in order to indicate whether the test set account combination belongs or does not belong to the same user;
    wherein the at least two different features that are correlated with behavioral data of a user of the account comprise: a social feature of an account in the account combination, a spatial feature of account publishing information in the account combination, a temporal feature of account publishing information in the account combination, and a text feature of account publishing information in the account combination;
    wherein the step of performing computation on the predicted value or the set of predicted values of the at least one test set account combination by using an association algorithm, and outputting a computed prediction result for the at least one test set account combination comprises: performing computation on the predicted value or the set of predicted values of the at least one test set account combination by using a multi-network approach MNA algorithm, and outputting the computed prediction result for the at least one test set account combination.

2.  The method according to claim 1, wherein the social feature of an account in the account combination comprises: the number of common adjacent elements, a Jaccard similarity coefficient and an Adamic/Adar measure, wherein the number of common adjacent elements refers to the number of common friends of accounts in the account combination, and accounts having the common friends are in the training set; the Jaccard similarity coefficient refers to a ratio of the number of common friends of accounts in the account combination to the number of all friends of accounts in the account combination; and the Adamic/Adar measure refers to influence of the common friends of accounts in the account combination on respective social networks.

3. The method according to claim 1, wherein the spatial feature of account publishing information in the account combination comprises: the number of common locations of all account publishing information in the account combination, a cosine similarity of a location set of all account publishing information in the account combination, and an average distance of the location set of all account publishing information in the account combination.

4. The method according to claim 1, wherein the temporal feature of account publishing information in the account combination comprises: the number of common time ranges of all account publishing information in the account combination, and a cosine similarity of a time range set of all account publishing information in the account combination.

5. The method according to claim 1, wherein the text feature of account publishing information in the account combination comprises: an inner product of bag-of-words vectors of all account publishing information in the account combination, and a cosine similarity of the bag-of-words vectors of all account publishing information in the account combination.

6. The method according to claim 5, wherein the method further comprises:

processing, by using a natural language processing technology, information published by an account in the test set or training set account combination; and
generating a bag-of-words vector of the account from the processed information by using a term frequency-inverse document frequency (TF-IDF) weighting model.

7. The method according to claim 1, wherein the step of performing computation on the predicted value or the set of predicted values of the at least one test set account combination by using a multi-network approach MNA algorithm, and outputting the computed prediction result for the at least one test set account combination comprises:

sorting, in at least one the test set account combination, predicted values or sets of predicted values of all account combinations corresponding to an account in the test set in order of the predicted values, to obtain a list of predicted values of the account; and
if a closed account pair exists in the at least one test set account combination, accounts corresponding to the closed account pair belong to a same user, and outputting the closed account pair that belongs to a same user, wherein the closed account pair meets the following conditions: a test set account combination corresponding to a maximum predicted value in a list of predicted values of an account $a_i$ is $(a_i, b_j)$, and a test set account combination corresponding to a maximum predicted value in a list of predicted values of an account $b_j$ is $(b_j, a_i)$.

8. The method according to claim 7, after the step of sorting, in the at least one test set account combination, predicted values or sets of predicted values of all account combinations corresponding to an account in the test set in order of the predicted values, to obtain a list of predicted values of the account, further comprising:

if the test set account combination corresponding to the maximum predicted value in the list of predicted values of the account $a_i$ is $(a_i, b_j)$, and the test set account combination corresponding to the maximum predicted value in the list of predicted values of the account $b_j$ is $(b_j, a_k)$, comparing the predicted value of the test set account combination $(a_i, b_j)$ with the predicted value of the test set account combination $(b_j, a_k)$;
if the predicted value of the test set account combination $(a_i, b_j)$ is smaller than the predicted value of the test set account combination $(b_j, a_k)$, the account $a_k$ and the account $b_j$ belong to a same user and that the account $a_i$ and the account $b_j$ do not belong to a same user, and outputting the test set account combination $(b_j, a_k)$ that belongs to a same user; and
if the predicted value of the test set account combination $(a_i, b_j)$ is greater than the predicted value of the test set account combination $(b_j, a_k)$, the account $a_i$ and the account $b_j$ belong to a same user and that the account $a_k$ and the account $b_j$ do not belong to a same user, and outputting the test set account combination $(a_i, b_j)$ that belongs to a same user.

9. An apparatus for identifying a same user in multiple social networks, wherein it is defined that a same user has only one account in one social network, that the number of accounts in an account combination equals the number of social networks, and that each account in the account combination comes from a different social network; and the apparatus comprises: a first generating module (101), a first extraction module (102), a first obtaining module (103) and an output module (104, 304), wherein:

the first generating module (101) is configured to, after accounts that are in a test set and are obtained from registered accounts in at least two different social networks are inputted, generate at least one test set account combination from the accounts in the test set;

the first extraction module (102) is configured to, after the first generating module (101) generates the at least one test set account combination, extract at least two different features that are of each account in the at least one test set account combination and are correlated with behavioral data of a user of the account;

the first obtaining module (103) is configured to, after the first extraction module (102) extracts the at least two different features that are of each account in the at least one test set account combination and are correlated with behavioral data of a user of the account, input the extracted features into a classification and prediction model that is already established, to obtain a predicted value or a set of predicted values, which may belong to a same user, of the at least one test set account combination; and

the output module (104, 304) is configured to, after the first obtaining module (103) obtains the predicted value or the set of predicted values, which may belong to a same user, of the at least one test set account combination, perform computation on the predicted value or the set of predicted values of the at least one test set account combination by using an association algorithm, and output a computed prediction result for the at least one test set account combination;

wherein the association algorithm refers to a process in which correlation between predicted values of a test set account combination is computed to obtain a prediction result for the test set account combination in order to indicate whether the test set account combination belongs or does not belong to the same user;

the apparatus further comprising:

a second generating module (305), a second extraction module (206) and a second obtaining module (307); the second generating module (305) is configured to, after accounts in a training set which are obtained from registered accounts in at least two different social networks are inputted, generate a training set account combination from accounts, which belong to a same user, among the accounts in the training set;

the second extraction module (206) is configured to, after the second generating module (305) generates the at least one test set account combination, extract at least two different features that are of each account in the training set account combination and are correlated with behavioral data of a user of the account; and

the second obtaining module (307) is configured to, after the second extraction module (206) extracts the at least two different features that are of each account in the training set account combination and are correlated with behavioral data of a user of the account, train the training set with a supervised algorithm by using the extracted features, to obtain the classification and prediction model;

wherein the at least two different features that are correlated with behavioral data of a user of the account comprise: a social feature of an account in the account combination, a spatial feature of account publishing information in the account combination, a temporal feature of account publishing information in the account combination, and a text feature of account publishing information in the account combination;

wherein the output module (104, 304) is specifically configured to perform computation on the predicted value or the set of predicted values of the at least one test set account combination by using a multi-network approach MNA algorithm, and output the computed prediction result for the at least one test set account combination.

10. The apparatus according to claim 9, wherein the social feature of an account in the account combination comprises: the number of common adjacent elements, a Jaccard Jaccard similarity coefficient and an Adamic/Adar Adamic/Adar measure, wherein the number of common adjacent elements refers to the number of common friends of accounts in the account combination, and accounts having the common friends are in the training set; the Jaccard similarity coefficient refers to a ratio of the number of common friends of accounts in the account combination to the number of all friends of accounts in the account combination; and the Adamic/Adar measure refers to influence of the common friends of accounts in the account combination on respective social networks.

11. The apparatus according to claim 9, wherein the spatial feature of account publishing information in the account combination comprises: the number of common locations of all account publishing information in the account combination, a cosine similarity of a location set of all account publishing information in the account combination, and an average distance of the location set of all account publishing information in the account combination.

12. The apparatus according to claim 9, wherein the temporal feature of account publishing information in the account combination comprises: the number of common time ranges of all account publishing information in the account combination, and a cosine similarity of a time range set of all account publishing information in the account combination.

**13.** The apparatus according to claim 9, wherein the text feature of account publishing information in the account combination comprises: an inner product of bag-of-words vectors of all account publishing information in the account combination, and a cosine similarity of the bag-of-words vectors of all account publishing information in the account combination.

**14.** The apparatus according to claim 13, wherein the apparatus further comprises: a processing module and a third generating module (106);
the processing module is configured to process, by using a natural language processing technology, information published by an account in the test set or training set account combination; and
the third generating module (106) is configured to, after the processing module processes the information published by an account in the test set or training set account combination, generate a bag-of-words vector of the account from the processed information by using a term frequency-inverse document frequency (TF-IDF) weighting model.

**15.** The apparatus according to claim 9, wherein the output module (104, 304) comprises: an obtaining unit (3041) and a first output unit (3043);
the obtaining unit (3041) is configured to sort, in the at least one test set account combination, predicted values or sets of predicted values of all account combinations corresponding to an account in the test set in order of the predicted values, to obtain a list of predicted values of the account; and
the first output unit (3043) is configured to, after the obtaining unit (3041) obtains the list of predicted values of the account, if a closed account pair exists in the at least one test set account combination, determine that accounts corresponding to the closed account pair belong to a same user, and output the closed account pair that belongs to a same user, wherein the closed account pair meets the following conditions: a test set account combination corresponding to a maximum predicted value in a list of predicted values of an account $a_i$ is $(a_i, b_j)$, and a test set account combination corresponding to a maximum predicted value in a list of predicted values of an account $b_j$ is $(b_j, a_i)$.

**16.** The apparatus according to claim 15, wherein the output module (104, 304) comprises: a comparison unit (3044) and a second output unit (3045);
the comparison unit (3044) is configured to, if the test set account combination corresponding to the maximum predicted value in the list of predicted values of the account $a_i$ is $(a_i, b_j)$, and the test set account combination corresponding to the maximum predicted value in the list of predicted values of the account $b_j$ is $(b_j, a_k)$, compare the predicted value of the test set account combination $(a_i, b_j)$ with the predicted value of the test set account combination $(b_j, a_k)$; and
the second output unit (3045) is configured to, when a comparison result of the comparison unit (3044) is that the predicted value of the test set account combination $(a_i, b_j)$ is smaller than the predicted value of the test set account combination $(b_j, a_k)$, determine that the account $a_k$ and the account $b_j$ belong to a same user and that the account $a_i$ and the account bj do not belong to a same user, and output the test set account combination $(b_j, a_k)$ that belongs to a same user; and when the comparison result of the comparison unit is that the predicted value of the test set account combination $(a_i, b_j)$ is greater than the predicted value of the test set account combination $(b_j, a_k)$, determine that the account $a_i$ and the account $b_j$ belong to a same user and that the account $a_k$ and the account $b_j$ do not belong to a same user, and output the test set account combination $(a_i, b_j)$ that belongs to a same user.

**Patentansprüche**

**1.** Verfahren zur Identifizierung desselben Benutzers in mehreren sozialen Netzwerken, wobei festgelegt ist, dass derselbe Benutzer in einem sozialen Netzwerk nur ein Konto besitzt, dass die Anzahl der Konten in einer Kontokombination der Anzahl der sozialen Netzwerke entspricht, und dass jedes Konto in der Kontokombination aus einem unterschiedlichen sozialen Netzwerk stammt; und wobei das Verfahren Folgendes umfasst:

Einbringen (S101) von Konten, die sich in einem Testsatz befinden und von registrierten Konten in mindestens zwei unterschiedlichen sozialen Netzwerken erlangt werden, und Erzeugen mindestens einer Testsatz-Kontokombination aus den Konten im Testsatz;
Extrahieren (S102) von mindestens zwei unterschiedlichen Merkmalen, die von jedem Konto in der mindestens einen Testsatz-Kontokombination stammen und mit Verhaltensdaten eines Benutzers des Kontos korrelieren;
Einbringen (S201) von aus mindestens zwei unterschiedlichen sozialen Netzwerken erlangten Konten in einen Trainingssatz, und Erzeugen einer Trainingssatz-Kontokombination aus Konten unter den Konten im Trainingssatz, die zu demselben Benutzer gehören;

Extrahieren (S202) von mindestens zwei unterschiedlichen Merkmalen, die von jedem Konto in der Trainingssatz-Kontokombination stammen und mit Verhaltensdaten eines Benutzers des Kontos korrelieren; und

Trainieren (S203) des Trainingssatzes mit einem überwachten Klassifizierungsalgorithmus und durch Nutzung der mindestens zwei unterschiedlichen Merkmale, die von jedem Konto in der Trainingssatz-Kontokombination stammen und mit Verhaltensdaten eines Benutzers des Kontos korrelieren, um ein Klassifizierungs- und Vorhersagemodell zu gewinnen;

Einbringen (S103) der mindestens zwei unterschiedlichen Merkmale, die von jedem Konto in der mindestens einen Testsatz-Kontokombination stammen und mit Verhaltensdaten eines Benutzers des Kontos korrelieren, in das gewonnene Klassifizierungs- und Vorhersagemodell, um einen Prädiktionswert oder einen Satz von Prädiktionswerten, die zu demselben Benutzer gehören, der mindestens einen Testsatz-Kontokombination zu erhalten; und

Durchführen (S104) der Berechnung mit dem Prädiktionswert oder dem Satz von Prädiktionswerten der mindestens einen Testsatz-Kontokombination durch Nutzung eines Assoziationsalgorithmus, und Ausgeben eines berechneten Prognoseergebnisses für die mindestens eine Testsatz-Kontokombination;

wobei sich der Assoziationsalgorithmus auf ein Verfahren bezieht, bei dem die Korrelation zwischen den Prädiktionswerten einer Testsatz-Kontokombination berechnet wird, um ein Prognoseergebnis für die Testsatz-Kontokombination zu erhalten, und um anzugeben, ob oder ob nicht die Testsatz-Kontokombination zu demselben Benutzer gehört;

wobei die mindestens zwei unterschiedlichen Merkmale, die mit den Verhaltensdaten eines Benutzers des Kontos korrelieren, Folgendes umfassen: ein soziales Merkmal eines Kontos in der Kontokombination, ein räumliches Merkmal der Kontoveröffentlichungsinformationen in der Kontokombination, ein zeitliches Merkmal der Kontoveröffentlichungsinformationen in der Kontokombination sowie ein Textmerkmal der Kontoveröffentlichungsinformationen in der Kontokombination; wobei der Schritt der Durchführung der Berechnung mit dem Prädiktionswert oder dem Satz von Prädiktionswerten der mindestens einen Testsatz-Kontokombination durch Nutzung eines Assoziationsalgorithmus und des Ausgebens eines berechneten Prognoseergebnisses für die mindestens eine Testsatz-Kontokombination Folgendes umfasst: Durchführen der Berechnung mit dem Prädiktionswert oder dem Satz von Prädiktionswerten der mindestens einen Testsatz-Kontokombination durch Nutzung eines Multi-Netzwerk-Ansatz(MNA)-Algorithmus, und Ausgeben des berechneten Prognoseergebnisses für die mindestens eine Testsatz-Kontokombination.

2. Verfahren nach Anspruch 1, wobei das soziale Merkmal eines Kontos in der Kontokombination Folgendes umfasst: die Anzahl gemeinsam einander benachbarter Elemente, einen Jaccard-Ähnlichkeitskoeffizienten sowie ein Adamic/Adar-Maß, wobei sich die Anzahl gemeinsam einander benachbarter Elemente auf die Anzahl gemeinsamer Bekannter von Konten in der Kontokombination bezieht, und Konten, welche die gemeinsamen Bekannten aufweisen, befinden sich im Trainingssatz; wobei sich der Jaccard-Ähnlichkeitskoeffizient auf ein Verhältnis der Anzahl gemeinsamer Bekannter von Konten in der Kontokombination zur Anzahl aller Bekannten von Konten in der Kontokombination bezieht; und wobei sich das Adamic/Adar-Maß auf den Einfluss der gemeinsamen Bekannten von Konten in der Kontokombination auf entsprechende soziale Netzwerke bezieht.

3. Verfahren nach Anspruch 1, wobei das räumliche Merkmal der Kontoveröffentlichungsinformationen in der Kontokombination Folgendes umfasst: die Anzahl gemeinsamer Lokationen von allen Kontoveröffentlichungsinformationen in der Kontokombination, eine Kosinus-Ähnlichkeit eines Lokationensatzes von allen Kontoveröffentlichungsinformationen in der Kontokombination sowie einen mittleren Abstand des Lokationensatzes von allen Kontoveröffentlichungsinformationen in der Kontokombination.

4. Verfahren nach Anspruch 1, wobei das zeitliche Merkmal der Kontoveröffentlichungsinformationen in der Kontokombination Folgendes umfasst:
die Anzahl gemeinsamer Zeitspannen von allen Kontoveröffentlichungsinformationen in der Kontokombination, und eine Kosinus-Ähnlichkeit eines Zeitspannensatzes von allen Kontoveröffentlichungsinformationen in der Kontokombination.

5. Verfahren nach Anspruch 1, wobei das Textmerkmal der Kontoveröffentlichungsinformationen in der Kontokombination Folgendes umfasst:
ein inneres Produkt von "Bag-of-words"-Vektoren von allen Kontoveröffentlichungsinformationen in der Kontokombination, und eine Kosinus-Ähnlichkeit der "Bag-of-words"-Vektoren von allen Kontoveröffentlichungsinformationen in der Kontokombination.

6. Verfahren nach Anspruch 5, wobei das Verfahren ferner Folgendes umfasst:

Verarbeiten von Informationen, die von einem Konto in der Testsatz- oder Trainingssatz-Kontokombination veröffentlicht werden, durch Einsatz einer Verarbeitungstechnologie für natürliche Sprache; und

Erzeugen eines "Bag-of-words"-Vektors des Kontos aus den verarbeiteten Informationen durch Einsatz eines ("Term Frequency-Inverse Document Frequency"(TF-IDF) -Gewichtungsmodells).

**7.** Verfahren nach Anspruch 1, wobei der Schritt der Durchführung der Berechnung mit dem Prädiktionswert oder dem Satz von Prädiktionswerten der mindestens einen Testsatz-Kontokombination durch Nutzung eines Multi-Netzwerk-Ansatz(MNA)-Algorithmus und Ausgeben des berechneten Prognoseergebnisses für die mindestens eine Testsatz-Kontokombination Folgendes umfasst:

Sortieren, in der mindestens einen Testsatz-Kontokombination, von Prädiktionswerten oder Sätzen von Prädiktionswerten von allen Kontokombinationen, die sich auf ein Konto im Testsatz beziehen, in der Reihenfolge der Prädiktionswerte, um eine Liste von Prädiktionswerten des Kontos zu erhalten; und

falls in der mindestens einen Testsatz-Kontokombination ein abgeschlossenes Kontopaar existiert, gehören Konten, die sich auf das abgeschlossene Kontopaar beziehen, zu demselben Benutzer, und Ausgeben des abgeschlossenen Kontopaars, das zu demselben Benutzer gehört, wobei das abgeschlossene Kontopaar die folgenden Bedingungen erfüllt: eine Testsatz-Kontokombination, die sich auf einen höchsten Prädiktionswert in einer Liste von Prädiktionswerten eines Kontos $a_i$ bezieht, ist $(a_i, b_j)$, und eine Testsatz-Kontokombination, die sich auf einen höchsten Prädiktionswert in einer Liste von Prädiktionswerten eines Kontos $b_j$ bezieht, ist $(b_j, a_i)$;

**8.** Verfahren nach Anspruch 7, nach dem Schritt des Sortierens, in der mindestens einen Testsatz-Kontokombination, von Prädiktionswerten oder Sätzen von Prädiktionswerten von allen Kontokombinationen, die sich auf ein Konto im Testsatz beziehen, in der Reihenfolge der Prädiktionswerte, um eine Liste von Prädiktionswerten des Kontos zu erhalten, des Weiteren Folgendes umfassend:

falls die Testsatz-Kontokombination, die sich auf den höchsten Prädiktionswert in der Liste von Prädiktionswerten des Kontos $a_i$ bezieht, $(a_i, b_j)$ ist, und falls die Testsatz-Kontokombination, die sich auf den höchsten Prädiktionswert in der Liste von Prädiktionswerten des Kontos $b_j$ bezieht, $(b_j, a_k)$ ist, Vergleichen des Prädiktionswerts der Testsatz-Kontokombination $(a_i, b_j)$ mit dem Prädiktionswert der Testsatz-Kontokombination $(b_j, a_k)$;

falls der Prädiktionswert der Testsatz-Kontokombination $(a_i, b_j)$ kleiner als der Prädiktionswert der Testsatz-Kontokombination $(b_j, a_k)$ ist, gehören das Konto $a_k$ und das Konto $b_j$ zu demselben Benutzer und das Konto $a_i$ und das Konto $b_j$ gehören nicht zu demselben Benutzer, und Ausgeben der Testsatz-Kontokombination $(b_j, a_k)$, die zu demselben Benutzer gehört; und

falls der Prädiktionswert der Testsatz-Kontokombination $(a_i, b_j)$ größer als der Prädiktionswert der Testsatz-Kontokombination $(b_j, a_k)$ ist, gehören das Konto $a_i$ und das Konto $b_j$ zu demselben Benutzer und das Konto $a_k$ und das Konto $b_j$ gehören nicht zu demselben Benutzer, und Ausgeben der Testsatz-Kontokombination $(a_i, b_j)$, die zu demselben Benutzer gehört.

**9.** Vorrichtung zur Identifizierung desselben Benutzers in mehreren sozialen Netzwerken, wobei festgelegt ist, dass derselbe Benutzer in einem sozialen Netzwerk nur ein Konto besitzt, dass die Anzahl der Konten in einer Kontokombination der Anzahl der sozialen Netzwerke entspricht, und dass jedes Konto in der Kontokombination aus einem unterschiedlichen sozialen Netzwerk stammt; und wobei die Vorrichtung Folgendes umfasst: ein erstes Generierungsmodul (101), ein erstes Extraktionsmodul (102), ein erstes Beschaffungsmodul (103) und ein Ausgabemodul (104, 304), wobei:

das erste Generierungsmodul (101) dafür eingerichtet ist, nachdem Konten eingebracht sind, die sich in einem Testsatz befinden und von registrierten Konten in mindestens zwei unterschiedlichen sozialen Netzwerken erlangt werden, mindestens eine Testsatz-Kontokombination aus den Konten im Testsatz zu erzeugen;

das erste Extraktionsmodul (102) dafür eingerichtet ist, nachdem das erste Generierungsmodul (101) die mindestens eine Testsatz-Kontokombination erzeugt, mindestens zwei unterschiedliche Merkmale zu extrahieren, die von jedem Konto in der mindestens einen Testsatz-Kontokombination stammen und mit Verhaltensdaten eines Benutzers des Kontos korrelieren;

das erste Beschaffungsmodul (103) dafür eingerichtet ist, nachdem das erste Extraktionsmodul (102) die mindestens zwei unterschiedlichen Merkmale extrahiert, die von jedem Konto in der mindestens einen Testsatz-Kontokombination stammen und mit Verhaltensdaten eines Benutzers des Kontos korrelieren, die extrahierten Merkmale in ein bereits eingerichtetes Klassifizierungs- und Vorhersagemodell einzubringen, um einen Prädiktionswert oder einen Satz von Prädiktionswerten, die möglicherweise zu demselben Benutzer gehören, der mindestens einen Testsatz-Kontokombination zu erhalten; und

das Ausgabemodul (104, 304) dafür eingerichtet ist, nachdem das erste Beschaffungsmodul (103) den Prädiktionswert oder den Satz von Prädiktionswerten, die möglicherweise zu demselben Benutzer gehören, der mindestens einen Testsatz-Kontokombination erlangt, die Berechnung mit dem Prädiktionswert oder dem Satz von Prädiktionswerten der mindestens einen Testsatz-Kontokombination durchzuführen, indem ein Assoziationsalgorithmus verwendet wird, und ein berechnetes Prognoseergebnis für die mindestens eine Testsatz-Kontokombination auszugeben;

wobei sich der Assoziationsalgorithmus auf ein Verfahren bezieht, bei dem die Korrelation zwischen Prädiktionswerten einer Testsatz-Kontokombination berechnet wird, um ein Prognoseergebnis für die Testsatz-Kontokombination zu erhalten, und um anzugeben, ob oder ob nicht die Testsatz-Kontokombination zu demselben Benutzer gehört;

wobei die Vorrichtung ferner Folgendes umfasst:

ein zweites Generierungsmodul (305), ein zweites Extraktionsmodul (206) und ein zweites Beschaffungsmodul (307);

wobei das zweite Generierungsmodul (305) dafür eingerichtet ist, nachdem Konten in einen Trainingssatz, die von registrierten Konten aus mindestens zwei unterschiedlichen sozialen Netzwerken erlangt werden, eingebracht sind, eine Trainingssatz-Kontokombination aus Konten unter den Konten im Trainingssatz zu erzeugen, die zu demselben Benutzer gehören;

das zweite Extraktionsmodul (206) dafür eingerichtet ist, nachdem das zweite Generierungsmodul (305) die mindestens eine Testsatz-Kontokombination erzeugt, mindestens zwei unterschiedliche Merkmale zu extrahieren, die von jedem Konto in der Trainingssatz-Kontokombination stammen und mit Verhaltensdaten eines Benutzers des Kontos korrelieren; und

das zweite Beschaffungsmodul (307) dafür eingerichtet ist, nachdem das zweite Extraktionsmodul (206) die mindestens zwei unterschiedlichen Merkmale extrahiert, die von jedem Konto in der Trainingssatz-Kontokombination stammen und mit Verhaltensdaten eines Benutzers des Kontos korrelieren, den Trainingssatz mit dem überwachten Algorithmus durch Nutzung der extrahierten Merkmale zu trainieren, um das Klassifizierungs- und Vorhersagemodell zu gewinnen;

wobei die mindestens zwei unterschiedlichen Merkmale, die mit den Verhaltensdaten eines Benutzers des Kontos korrelieren, Folgendes umfassen: ein soziales Merkmal eines Kontos in der Kontokombination, ein räumliches Merkmal der Kontoveröffentlichungsinformationen in der Kontokombination, ein zeitliches Merkmal der Kontoveröffentlichungsinformationen in der Kontokombination, sowie ein Textmerkmal der Kontoveröffentlichungsinformationen in der Kontokombination;

wobei das Ausgabemodul (104, 304) im Besonderen dafür eingerichtet ist, die Berechnung mit dem Prädiktionswert oder dem Satz von Prädiktionswerten der mindestens einen Testsatz-Kontokombination durch Nutzung eines Multi-Netzwerk-Ansatz(MNA)-Algorithmus durchzuführen, und das berechnete Prognoseergebnis für die mindestens eine Testsatz-Kontokombination auszugeben.

10. Vorrichtung nach Anspruch 9, wobei das soziale Merkmal eines Kontos in der Kontokombination Folgendes umfasst: die Anzahl gemeinsam einander benachbarter Elemente, einen Jaccard-Jaccard-Ähnlichkeitskoeffizienten sowie ein Adamic/Adar-Adamic/Adar-Maß, wobei sich die Anzahl gemeinsam einander benachbarter Elemente auf die Anzahl gemeinsamer Bekannter von Konten in der Kontokombination bezieht, und Konten, welche die gemeinsamen Bekannten aufweisen, befinden sich im Trainingssatz; wobei sich der Jaccard-Ähnlichkeitskoeffizient auf ein Verhältnis der Anzahl gemeinsamer Bekannter von Konten in der Kontokombination zur Anzahl aller Bekannten in der Kontokombination bezieht; und wobei sich das Adamic/Adar-Maß auf den Einfluss der gemeinsamen Bekannten von Konten in der Kontokombination auf entsprechende soziale Netzwerke bezieht.

11. Vorrichtung nach Anspruch 9, wobei das räumliche Merkmal der Kontoveröffentlichungsinformationen in der Kontokombination Folgendes umfasst: die Anzahl gemeinsamer Lokationen von allen Kontoveröffentlichungsinformationen in der Kontokombination, eine Kosinus-Ähnlichkeit eines Lokationensatzes von allen Kontoveröffentlichungsinformationen in der Kontokombination sowie einen mittleren Abstand des Lokationensatzes von allen Kontoveröffentlichungsinformationen in der Kontokombination.

12. Vorrichtung nach Anspruch 9, wobei das zeitliche Merkmal der Kontoveröffentlichungsinformationen in der Kontokombination Folgendes umfasst:
die Anzahl gemeinsamer Zeitspannen von allen Kontoveröffentlichungsinformationen in der Kontokombination, und eine Kosinus-Ähnlichkeit eines Zeitspannensatzes von allen Kontoveröffentlichungsinformationen in der Kontokombination.

**13.** Vorrichtung nach Anspruch 9, wobei das Textmerkmal der Kontoveröffentlichungsinformationen in der Kontokombination Folgendes umfasst:

ein inneres Produkt von "Bag-of-words"-Vektoren von allen Kontoveröffentlichungsinformationen in der Kontokombination, und eine Kosinus-Ähnlichkeit der "Bag-of-words"-Vektoren von allen Kontoveröffentlichungsinformationen in der Kontokombination.

**14.** Vorrichtung nach Anspruch 13, wobei die Vorrichtung ferner Folgendes umfasst: ein Verarbeitungsmodul und ein drittes Generierungsmodul (106);

wobei das Verarbeitungsmodul dafür eingerichtet ist, durch Einsatz einer Verarbeitungstechnologie für natürliche Sprache Informationen zu verarbeiten, die von einem Konto in der Testsatz- oder Trainingssatz-Kontokombination veröffentlicht werden; und

wobei das dritte Generierungsmodul (106) dafür eingerichtet ist, nachdem das Verarbeitungsmodul die von einem Konto in der Testsatz- oder Trainingssatz-Kontokombination veröffentlichten Informationen verarbeitet, einen "Bag-of-words"-Vektor des Kontos aus den verarbeiteten Informationen durch Einsatz eines "Term Frequency-Inverse Document Frequency"(TF-IDF)-Gewichtungsmodells zu generieren.

**15.** Vorrichtung nach Anspruch 9, wobei das Ausgabemodul (104, 304) Folgendes umfasst: eine Beschaffungseinheit (3041) und eine erste Ausgabeeinheit (3043); wobei die Beschaffungseinheit (3041) dafür eingerichtet ist, in der mindestens einen Testsatz-Kontokombination, Prädiktionswerte oder Sätze von Prädiktionswerten von allen Kontokombinationen, die sich auf ein Konto im Testsatz beziehen, in der Reihenfolge der Prädiktionswerte zu sortieren, um eine Liste von Prädiktionswerten des Kontos zu erhalten; und

wobei die erste Ausgabeeinheit (3043) dafür eingerichtet ist, nachdem die Beschaffungseinheit (3041) die Liste von Prädiktionswerten des Kontos erlangt, zu bestimmen, falls in der mindestens einen Testsatz-Kontokombination ein abgeschlossenes Kontopaar existiert, dass Konten, die sich auf das abgeschlossene Kontopaar beziehen, zu demselben Benutzer gehören, und das abgeschlossene Kontopaar auszugeben, das zu demselben Benutzer gehört, wobei das geschlossene Kontopaar die folgenden Bedingungen erfüllt: eine Testsatz-Kontokombination, die sich auf einen höchsten Prädiktionswert in einer Liste von Prädiktionswerten eines Kontos $a_i$ bezieht, ist $(a_i, b_j)$, und eine Testsatz-Kontokombination, die sich auf einen höchsten Prädiktionswert in einer Liste von Prädiktionswerten eines Kontos $b_j$ bezieht, ist $(b_j, a_i)$.

**16.** Vorrichtung nach Anspruch 15, wobei das Ausgabemodul (104, 304) Folgendes umfasst: eine Vergleichseinheit (3044) und eine zweite Ausgabeeinheit (3045); wobei die Vergleichseinheit (3044) dafür eingerichtet ist, falls die Testsatz-Kontokombination, die sich auf den höchsten Prädiktionswert in der Liste von Prädiktionswerten des Kontos $a_i$ bezieht, $(a_i, b_j)$ ist, und falls die Testsatz-Kontokombination, die sich auf den höchsten Prädiktionswert in der Liste von Prädiktionswerten des Kontos $b_j$ bezieht, $(b_j, a_k)$ ist, den Prädiktionswert der Testsatz-Kontokombination $(a_i, b_j)$ mit dem Prädiktionswert der Testsatz-Kontokombination $(b_j, a_k)$ zu vergleichen; und

wobei die zweite Ausgabeeinheit (3045) dafür eingerichtet ist, wenn ein Vergleichsergebnis der Vergleichseinheit (3044) ergibt, dass der Prädiktionswert der Testsatz-Kontokombination $(a_i, b_j)$ kleiner als der Prädiktionswert der Testsatz-Kontokombination $(b_j, a_k)$ ist, zu bestimmen, dass das Konto $a_k$ und das Konto $b_j$ zu demselben Benutzer gehören, und dass das Konto $a_i$ und das Konto $b_j$ nicht zu demselben Benutzer gehören, und die Testsatz-Kontokombination $(b_j, a_k)$ auszugeben, die zu demselben Benutzer gehört; und wenn das Vergleichsergebnis der Vergleichseinheit ergibt, dass der Prädiktionswert der Testsatz-Kontokombination $(a_i, b_j)$ größer als der Prädiktionswert der Testsatz-Kontokombination $(b_j, a_k)$ ist, zu bestimmen, dass das Konto $a_i$ und das Konto $b_j$ zu demselben Benutzer gehören, und dass das Konto $a_k$ und das Konto $b_j$ nicht zu demselben Benutzer gehören, und die Testsatz-Kontokombination $(a_i, b_j)$ auszugeben, die zu demselben Benutzer gehört.

**Revendications**

**1.** Procédé d'identification d'un même utilisateur dans de multiples réseaux sociaux, dans lequel il est défini qu'un même utilisateur a uniquement un compte dans un réseau social, que le nombre de comptes dans une combinaison de comptes est égal au nombre de réseaux sociaux, et que chaque compte dans la combinaison de comptes vient d'un réseau social différent ; et le procédé comprend :

l'entrée (S101) de comptes qui sont dans un ensemble de test et sont obtenus à partir de comptes enregistrés dans au moins deux réseaux sociaux différents, et la génération d'au moins une combinaison de comptes d'ensemble de test à partir des comptes dans l'ensemble de test ;
l'extraction (S102) d'au moins deux traits différents qui proviennent de chaque compte dans l'au moins une combinaison de comptes d'ensemble de test et sont corrélés à des données comportementales d'un utilisateur du compte ;

l'entrée (S201) de comptes dans un ensemble d'apprentissage qui sont obtenus à partir d'au moins deux réseaux sociaux différents, et la génération d'une combinaison de comptes d'ensemble d'apprentissage à partir de comptes, qui appartiennent à un même utilisateur, parmi les comptes dans l'ensemble d'apprentissage ;

l'extraction (S202) d'au moins deux traits différents qui proviennent de chaque compte dans la combinaison de comptes d'ensemble d'apprentissage et sont corrélés à des données comportementales d'un utilisateur du compte ; et

la formation (S203) de l'ensemble d'apprentissage avec un algorithme de classification supervisé et en utilisant les au moins deux traits différents qui proviennent de chaque compte dans la combinaison de comptes d'ensemble d'apprentissage et sont corrélés à des données comportementales d'un utilisateur du compte, pour obtenir un modèle de classification et de prédiction ;

l'entrée (S103) des au moins deux traits différents qui proviennent de chaque compte dans l'au moins une combinaison de comptes d'ensemble de test et sont corrélés à des données comportementales d'un utilisateur du compte dans le modèle de classification et de prédiction obtenu, pour obtenir une valeur prédite ou un ensemble de valeurs prédites, qui appartiennent à un même utilisateur, de l'au moins une combinaison de comptes d'ensemble de test ; et

la réalisation (S104) d'un calcul sur la valeur prédite ou l'ensemble de valeurs prédites de l'au moins une combinaison de comptes d'ensemble de test en utilisant un algorithme d'association, et la fourniture en sortie d'un résultat de prédiction calculé pour l'au moins une combinaison de comptes d'ensemble de test ;

dans lequel l'algorithme d'association fait référence à un processus dans lequel une corrélation entre les valeurs prédites d'une combinaison de comptes d'ensemble de test est calculée pour obtenir un résultat de prédiction pour la combinaison de comptes d'ensemble de test afin d'indiquer si la combinaison de comptes d'ensemble de test appartient ou non au même utilisateur ;

dans lequel les au moins deux traits différents qui sont corrélés à des données comportementales d'un utilisateur du compte comprennent : un trait social d'un compte dans la combinaison de comptes, un trait spatial d'informations de publication de compte dans la combinaison de comptes, un trait temporel d'informations de publication de compte dans la combinaison de comptes, et un trait de texte d'informations de publication de compte dans la combinaison de comptes ;

dans lequel l'étape de réalisation d'un calcul sur la valeur prédite ou l'ensemble de valeurs prédites de l'au moins une combinaison de comptes d'ensemble de test en utilisant un algorithme d'association, et de fourniture en sortie d'un résultat de prédiction calculé pour l'au moins une combinaison de comptes d'ensemble de test comprend : la réalisation d'un calcul sur la valeur prédite ou l'ensemble de valeurs prédites de l'au moins une combinaison de comptes d'ensemble de test en utilisant un algorithme d'approche multiréseau MNA, et la fourniture en sortie du résultat de prédiction calculé pour l'au moins une combinaison de comptes d'ensemble de test.

2. Procédé selon la revendication 1, dans lequel le trait social d'un compte dans la combinaison de comptes comprend : le nombre d'éléments adjacents communs, un coefficient de similitude de Jaccard et une mesure Adamic/Adar, dans lequel le nombre d'éléments adjacents communs fait référence au nombre d'amis communs de comptes dans la combinaison de comptes, et des comptes ayant les amis communs sont dans l'ensemble d'apprentissage ; le coefficient de similitude de Jaccard fait référence à un rapport entre le nombre d'amis communs de comptes dans la combinaison de comptes et le nombre de tous les amis de comptes dans la combinaison de comptes ; et la mesure Adamic/Adar fait référence à une influence des amis communs de comptes dans la combinaison de comptes sur des réseaux sociaux respectifs.

3. Procédé selon la revendication 1, dans lequel le trait spatial d'informations de publication de compte dans la combinaison de comptes comprend : le nombre de localisations communes de toutes les informations de publication de compte dans la combinaison de comptes, une similitude cosinusoïdale d'un ensemble de localisations de toutes les informations de publication de compte dans la combinaison de comptes, et une distance moyenne de l'ensemble de localisations de toutes les informations de publication de compte dans la combinaison de comptes.

4. Procédé selon la revendication 1, dans lequel le trait temporel d'informations de publication de compte dans la combinaison de comptes comprend : le nombre d'intervalles de temps communs de toutes les informations de publication de compte dans la combinaison de comptes, et une similitude cosinusoïdale d'un ensemble d'intervalles de temps de toutes les informations de publication de compte dans la combinaison de comptes.

5. Procédé selon la revendication 1, dans lequel le trait de texte d'informations de publication de compte dans la combinaison de comptes comprend : un produit intérieur de vecteurs de sac de mots de toutes les informations de publication de compte dans la combinaison de comptes, et une similitude cosinusoïdale des vecteurs de sac de mots de toutes les informations de publication de compte dans la combinaison de comptes.

6. Procédé selon la revendication 5, dans lequel le procédé comprend en outre :

le traitement, en utilisant une technologie de traitement de langage naturel, d'informations publiées par un compte dans la combinaison de comptes d'ensemble de test ou d'ensemble d'apprentissage ; et la génération d'un vecteur de sac de mots du compte à partir des informations traitées en utilisant un modèle de pondération de fréquence de terme-fréquence inverse de document (TF-IDF).

7. Procédé selon la revendication 1, dans lequel l'étape de réalisation d'un calcul sur la valeur prédite ou l'ensemble de valeurs prédites de l'au moins une combinaison de comptes d'ensemble de test en utilisant un algorithme d'approche multiréseau MNA, et de fourniture en sortie du résultat de prédiction calculé pour l'au moins une combinaison de comptes d'ensemble de test comprend :

le tri, dans l'au moins une combinaison de comptes d'ensemble de test, de valeurs prédites ou d'ensembles de valeurs prédites de toutes les combinaisons de comptes correspondant à un compte dans l'ensemble de test dans l'ordre des valeurs prédites, pour obtenir une liste de valeurs prédites du compte ; et si une paire de comptes fermés existe dans l'au moins une combinaison de comptes d'ensemble de test, des comptes correspondant à la paire de comptes fermés appartiennent à un même utilisateur, et la fourniture en sortie de la paire de comptes fermés qui appartient à un même utilisateur, dans lequel la paire de comptes fermés satisfait les conditions suivantes : une combinaison de comptes d'ensemble de test correspondant à une valeur prédite maximale dans une liste de valeurs prédites d'un compte $a_i$ est $(a_i, b_j)$, et une combinaison de comptes d'ensemble de test correspondant à une valeur prédite maximale dans une liste de valeurs prédites d'un compte $b_j$ est $(b_j, a_i)$.

8. Procédé selon la revendication 7, après l'étape de tri, dans l'au moins une combinaison de comptes d'ensemble de test, de valeurs prédites ou d'ensembles de valeurs prédites de toutes les combinaisons de comptes correspondant à un compte dans l'ensemble de test dans l'ordre des valeurs prédites, pour obtenir une liste de valeurs prédites du compte, comprenant en outre :

si la combinaison de comptes d'ensemble de test correspondant à la valeur prédite maximale dans la liste de valeurs prédites du compte $a_i$ est $(a_i, b_j)$, et la combinaison de comptes d'ensemble de test correspondant à la valeur prédite maximale dans la liste de valeurs prédites du compte $b_j$ est $(b_j, a_k)$, la comparaison de la valeur prédite de la combinaison de comptes d'ensemble de test $(a_i, b_j)$ à la valeur prédite de la combinaison de comptes d'ensemble de test $(b_j, a_k)$ ; si la valeur prédite de la combinaison de comptes d'ensemble de test $(a_i, b_j)$ est inférieure à la valeur prédite de la combinaison de comptes d'ensemble de test $(b_j, a_k)$, le compte $a_k$ et le compte $b_j$ appartiennent à un même utilisateur et le compte $a_i$ et le compte $b_j$ n'appartiennent pas à un même utilisateur, et la fourniture en sortie de la combinaison de comptes d'ensemble de test $(b_j, a_k)$ qui appartient à un même utilisateur ; et si la valeur prédite de la combinaison de comptes d'ensemble de test $(a_i, b_j)$ est supérieure à la valeur prédite de la combinaison de comptes d'ensemble de test $(b_j, a_k)$, le compte $a_i$ et le compte $b_j$ appartiennent à un même utilisateur et le compte $a_k$ et le compte $b_j$ n'appartiennent pas à un même utilisateur, et la fourniture en sortie de la combinaison de comptes d'ensemble de test $(a_i, b_j)$ qui appartient à un même utilisateur.

9. Appareil d'identification d'un même utilisateur dans de multiples réseaux sociaux, dans lequel il est défini qu'un même utilisateur a uniquement un compte dans un réseau social, que le nombre de comptes dans une combinaison de comptes est égal au nombre de réseaux sociaux, et que chaque compte dans la combinaison de comptes vient d'un réseau social différent ; et l'appareil comprend : un premier module de génération (101), un premier module d'extraction (102), un premier module d'obtention (103) et un module de sortie (104, 304), dans lequel :

le premier module de génération (101) est configuré, après que des comptes qui sont dans un ensemble de test et sont obtenus à partir de comptes enregistrés dans au moins deux réseaux sociaux différents sont entrés, pour générer au moins une combinaison de comptes d'ensemble de test à partir des comptes dans l'ensemble de test ; le premier module d'extraction (102) est configuré, après que le premier module de génération (101) génère l'au moins une combinaison de comptes d'ensemble de test, pour extraire au moins deux traits différents qui proviennent de chaque compte dans l'au moins une combinaison de comptes d'ensemble de test et sont corrélés à des données comportementales d'un utilisateur du compte ;

le premier module d'obtention (103) est configuré, après que le premier module d'extraction (102) extrait les au moins deux traits différents qui proviennent de chaque compte dans l'au moins une combinaison de comptes d'ensemble de test et sont corrélés à des données comportementales d'un utilisateur du compte, pour entrer les traits extraits dans un modèle de classification et de prédiction qui est déjà établi, pour obtenir une valeur prédite ou un ensemble de valeurs prédites, qui peuvent appartenir à un même utilisateur, de l'au moins une combinaison de comptes d'ensemble de test ; et

le module de sortie (104, 304) est configuré, après que le premier module d'obtention (103) obtient la valeur prédite ou l'ensemble de valeurs prédites, qui peuvent appartenir à un même utilisateur, de l'au moins une combinaison de comptes d'ensemble de test, pour réaliser un calcul sur la valeur prédite ou l'ensemble de valeurs prédites de l'au moins une combinaison de comptes d'ensemble de test en utilisant un algorithme d'association, et fournir en sortie un résultat de prédiction calculé pour l'au moins une combinaison de comptes d'ensemble de test ;

dans lequel l'algorithme d'association fait référence à un processus dans lequel une corrélation entre des valeurs prédites d'une combinaison de comptes d'ensemble de test est calculée pour obtenir un résultat de prédiction pour la combinaison de comptes d'ensemble de test afin d'indiquer si la combinaison de comptes d'ensemble de test appartient ou non au même utilisateur ;

l'appareil comprenant en outre :

un deuxième module de génération (305), un second module d'extraction (206) et un second module d'obtention (307) ;

le deuxième module de génération (305) est configuré, après que des comptes dans un ensemble d'apprentissage qui sont obtenus à partir de comptes enregistrés dans au moins deux réseaux sociaux différents sont entrés, pour générer une combinaison de comptes d'ensemble d'apprentissage à partir de comptes, qui appartiennent à un même utilisateur, parmi les comptes dans l'ensemble d'apprentissage ;

le second module d'extraction (206) est configuré, après que le deuxième module de génération (305) génère l'au moins une combinaison de comptes d'ensemble de test, pour extraire au moins deux traits différents qui proviennent de chaque compte dans la combinaison de comptes d'ensemble d'apprentissage et sont corrélés à des données comportementales d'un utilisateur du compte ; et

le second module d'obtention (307) est configuré, après que le second module d'extraction (206) extrait les au moins deux traits différents qui proviennent de chaque compte dans la combinaison de comptes d'ensemble d'apprentissage et sont corrélés à des données comportementales d'un utilisateur du compte, pour former l'ensemble d'apprentissage avec un algorithme supervisé en utilisant les traits extraits, pour obtenir le modèle de classification et de prédiction ;

dans lequel les au moins deux traits différents qui sont corrélés à des données comportementales d'un utilisateur du compte comprennent : un trait social d'un compte dans la combinaison de comptes, un trait spatial d'informations de publication de compte dans la combinaison de comptes, un trait temporel d'informations de publication de compte dans la combinaison de comptes, et un trait de texte d'informations de publication de compte dans la combinaison de comptes ;

dans lequel le module de sortie (104, 304) est configuré spécifiquement pour réaliser un calcul sur la valeur prédite ou l'ensemble de valeurs prédites de l'au moins une combinaison de comptes d'ensemble de test en utilisant un algorithme d'approche multiréseau MNA, et fournir en sortie le résultat de prédiction calculé pour l'au moins une combinaison de comptes d'ensemble de test.

10. Appareil selon la revendication 9, dans lequel le trait social d'un compte dans la combinaison de comptes comprend : le nombre d'éléments adjacents communs, un coefficient de similitude de Jaccard Jaccard et une mesure Adamic/Adar Adamic/Adar, dans lequel le nombre d'éléments adjacents communs fait référence au nombre d'amis communs de comptes dans la combinaison de comptes, et des comptes ayant les amis communs sont dans l'ensemble d'apprentissage ; le coefficient de similitude de Jaccard fait référence à un rapport entre le nombre d'amis communs de comptes dans la combinaison de comptes et le nombre de tous les amis de comptes dans la combinaison de comptes ; et la mesure Adamic/Adar fait référence à une influence des amis communs de comptes dans la combinaison de comptes sur des réseaux sociaux respectifs.

11. Appareil selon la revendication 9, dans lequel le trait spatial d'informations de publication de compte dans la combinaison de comptes comprend : le nombre de localisations communes de toutes les informations de publication de compte dans la combinaison de comptes, une similitude cosinusoïdale d'un ensemble de localisations de toutes les informations de publication de compte dans la combinaison de comptes, et une distance moyenne de l'ensemble de localisations de toutes les informations de publication de compte dans la combinaison de comptes.

12. Appareil selon la revendication 9, dans lequel le trait temporel d'informations de publication de compte dans la combinaison de comptes comprend : le nombre d'intervalles de temps communs de toutes les informations de publication de compte dans la combinaison de comptes, et une similitude cosinusoïdale d'un ensemble d'intervalles de temps de toutes les informations de publication de compte dans la combinaison de comptes.

13. Appareil selon la revendication 9, dans lequel le trait de texte d'informations de publication de compte dans la combinaison de comptes comprend : un produit intérieur de vecteurs de sac de mots de toutes les informations de publication de compte dans la combinaison de comptes, et une similitude cosinusoïdale des vecteurs de sac de mots de toutes les informations de publication de compte dans la combinaison de comptes.

14. Appareil selon la revendication 13, dans lequel l'appareil comprend en outre : un module de traitement et un troisième module de génération (106) ;
le module de traitement est configuré pour traiter, en utilisant une technologie de traitement de langage naturel, des informations publiées par un compte dans la combinaison de comptes d'ensemble de test ou d'ensemble d'apprentissage ; et
le troisième module de génération (106) est configuré, après que le module de traitement traite les informations publiées par un compte dans la combinaison de comptes d'ensemble de test ou d'ensemble d'apprentissage, pour générer un vecteur de sac de mots du compte à partir des informations traitées en utilisant un modèle de pondération de fréquence de terme-fréquence inverse de document (TF-IDF).

15. Appareil selon la revendication 9, dans lequel le module de sortie (104, 304) comprend :

une unité d'obtention (3041) et une première unité de sortie (3043) ;
l'unité d'obtention (3041) est configurée pour trier, dans l'au moins une combinaison de comptes d'ensemble de test, des valeurs prédites ou des ensembles de valeurs prédites de toutes les combinaisons de comptes correspondant à un compte dans l'ensemble de test dans l'ordre des valeurs prédites, pour obtenir une liste de valeurs prédites du compte ; et
la première unité de sortie (3043) est configurée, après que l'unité d'obtention (3041) obtient la liste de valeurs prédites du compte, si une paire de comptes fermés existe dans l'au moins une combinaison de comptes d'ensemble de test, pour déterminer que des comptes correspondant à la paire de comptes fermés appartiennent à un même utilisateur, et fournir en sortie la paire de comptes fermés qui appartient à un même utilisateur, dans lequel la paire de comptes fermés satisfait les conditions suivantes : une combinaison de comptes d'ensemble de test correspondant à une valeur prédite maximale dans une liste de valeurs prédites d'un compte $a_i$ est $(a_i, b_j)$, et une combinaison de comptes d'ensemble de test correspondant à une valeur prédite maximale dans une liste de valeurs prédites d'un compte $b_j$ est $(b_j, a_i)$.

16. Appareil selon la revendication 15, dans lequel le module de sortie (104, 304) comprend : une unité de comparaison (3044) et une seconde unité de sortie (3045) ;
l'unité de comparaison (3044) est configurée, si la combinaison de comptes d'ensemble de test correspondant à la valeur prédite maximale dans la liste de valeurs prédites du compte $a_i$ est $(a_i, b_j)$, et la combinaison de comptes d'ensemble de test correspondant à la valeur prédite maximale dans la liste de valeurs prédites du compte $b_j$ est $(b_j, a_k)$, pour comparer la valeur prédite de la combinaison de comptes d'ensemble de test $(a_i, b_j)$ à la valeur prédite de la combinaison de comptes d'ensemble de test $(b_j, a_k)$ ; et
la seconde unité de sortie (3045) est configurée, lorsqu'un résultat de comparaison de l'unité de comparaison (3044) est que la valeur prédite de la combinaison de comptes d'ensemble de test $(a_i, b_j)$ est inférieure à la valeur prédite de la combinaison de comptes d'ensemble de test $(b_j, a_k)$, pour déterminer que le compte $a_k$ et le compte $b_j$ appartiennent à un même utilisateur et que le compte $a_i$ et le compte $b_j$ n'appartiennent pas à un même utilisateur, et pour fournir en sortie la combinaison de comptes d'ensemble de test $(b_j, a_k)$ qui appartient à un même utilisateur ; et lorsque le résultat de comparaison de l'unité de comparaison est que la valeur prédite de la combinaison de comptes d'ensemble de test $(a_i, b_j)$ est supérieure à la valeur prédite de la combinaison de comptes d'ensemble de test $(b_j, a_k)$, pour déterminer que le compte $a_i$ et le compte $b_j$ appartiennent à un même utilisateur et que le compte $a_k$ et le compte $b_j$ n'appartiennent pas à un même utilisateur, et pour fournir en sortie la combinaison de comptes d'ensemble de test $(a_i, b_j)$ qui appartient à un même utilisateur.

Input accounts that are in a test set and are obtained from registered accounts in at least two different social networks, and generate a test set account combination from the accounts in the test set

S101

Extract at least two different features that are of each account in the test set account combination and are correlated with behavioral data of a user of the account

S102

Input the at least two different features that are of each account in the test set account combination and are correlated with behavioral data of a user of the account into a classification and prediction model that is already established, and obtain a predicted value or a set of predicted values, which may belong to a same user, of the test set account combination

S103

Perform computation on the predicted value or the set of predicted values of the test set account combination by using an association algorithm, and output a computed prediction result for the test set account combination

S104

FIG. 1

S201

Input accounts in a training set which are obtained from at least two different social networks, and generate a training set account combination from accounts, which belong to a same user, among the accounts in the training set

S202

Extract at least two different features that are of each account in the training set account combination and are correlated with behavioral data of a user of the account

S203

Train the training set with a supervised classification algorithm by using the at least two different features that are of each account in the training set account combination and are correlated with behavioral data of a user of the account, to obtain a classification and prediction model

S204

Input accounts that are in a test set and are obtained from registered accounts in at least two different social networks, and generate a test set account combination from the accounts in the test set

S205

Extract at least two different features that are of each account in the test set account combination and are correlated with behavioral data of a user of the account

S206

Input the at least two different features that are of each account in the test set account combination and are correlated with behavioral data of a user of the account into the classification and prediction model that is already established, to obtain a predicted value or a set of predicted values, which may belong to a same user, of the test set account combination

S207

Perform computation on the predicted value or the set of predicted values of the test set account combination by using an association algorithm, and output a computed prediction result for the test set account combination

FIG. 2

Input accounts in a training set which are obtained from at least two different social networks, and generate a training set account combination from accounts, which belong to a same user, among the accounts in the training set — S301

Extract at least two different features that are of each account in the training set account combination and are correlated with behavioral data of a user of the account — S302

Train the training set with a supervised classification algorithm by using the at least two different features that are of each account in the training set account combination and are correlated with behavioral data of a user of the account, to obtain a classification and prediction model — S303

Input accounts that are in a test set and are obtained from registered accounts in at least two different social networks, and generating a test set account combination from the accounts in the test set — S304

Extract at least two different features that are of each account in the test set account combination and are correlated with behavioral data of a user of the account — S305

Input the at least two different features that are of each account in the test set account combination and are correlated with behavioral data of a user of the account into the classification and prediction model that is already established, to obtain a predicted value or a set of predicted values, which may belong to a same user, of the test set account combination — S306

S307

Sort, in the test set account combination, predicted values or sets of predicted values of all account combinations corresponding to an account in the test set in order of the predicted values, to obtain a list of predicted values of the account — S307a

S307b — Determine whether a closed account pair exists in the test set account combination

Yes → S307c: Determine that accounts corresponding to the closed account pair belong to a same user, and output the closed account pair that belongs to a same user

No → S307d: If a test set account combination corresponding to a maximum predicted value in a list of predicted values of an account $a_i$ is $(a_i, b_j)$, and a test set account combination corresponding to a maximum predicted value in a list of predicted values of an account $b_j$ is $(b_j, a_k)$, compare the predicted value of the test set account combination $(a_i, b_j)$ with the predicted value of the test set account combination $(b_j, a_k)$

S307e — If the predicted value of the test set account combination $(a_i, b_j)$ is smaller than the predicted value of the test set account combination $(b_j, a_k)$, determine that the account $a_k$ and the account $b_j$ belong to a same user and that the account $a_i$ and the account $b_j$ do not belong to a same user, and output the test set account combination $(b_j, a_k)$ that belongs to a same user; and if the predicted value of the test set account combination $(a_i, b_j)$ is greater than the predicted value of the test set account combination $(b_j, a_k)$, determine that the account $a_i$ and the account $b_j$ belong to a same user and that the account $a_k$ and the account $b_j$ do not belong to a same user, and output the test set account combination $(a_i, b_j)$ that belongs to a same user

FIG. 3

| First generating module | First extraction module | First obtaining module | Output module |
|---|---|---|---|
| 101 | 102 | 103 | 104 |

FIG. 4

| First generating module | First extraction module | First obtaining module | Output module |
|---|---|---|---|
| 101 | 102 | 103 | 104 |

Third generating module  106

Processing module  105

FIG. 5

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MALHOTRA, ANSHU et al.** Studying User Footprints in Different Online Social Networks. *IEEE/ACM International Conference on Advances in Social Networks Analysis and Mining,* 2012